# EUROPEAN PATENT SPECIFICATION

(11) **EP 3 589 945 B1**
(45) Date of publication and mention of the grant of the patent: **26.06.2024**
(21) Application number: 18709956.9
(22) Date of filing: 23.02.2018
(51) Int. Cl.: G01N 30/46, G01N 30/20, G01N 30/60

(54) **PARALLEL SEPARATION AND WASHING IN SIZE EXCLUSION CHROMATOGRAPHY SEPARATION OR IN DESALTING OF A TARGET FROM A SAMPLE**
PARALLELE TRENNUNG UND REINIGUNG IN GRÖSSENAUSSCHLUSSCHROMATOGRAPHIE ODER IN EINEM ENTSALZUNG-PROZESS
SÉPARATION ET LAVAGE POUR LA CHROMATOGRAPHIE D'EXCLUSION STÉRIQUE OU POUR UNE ÉTAPE DE DESSALAGE

(30) Priority: 28.02.2017 GB 201703258
(43) Date of publication of application: 08.01.2020
(73) Proprietor: Cytiva Sweden AB, 751 84 Uppsala (SE)
(72) Inventor: ERIKSSON, Christer, Olof, 75184 Uppsala (SE)
(74) Representative: Bedford, Grant Richard
(86) International application number: PCT/EP2018/054595
(87) International publication number: WO 2018/158164

(56) References cited:
- EP-A1- 1 775 001
- WO-A1-2008/048395
- WO-A1-2013/162951
- WO-A2-97/01755
- US-A1- 2004 241 878
- US-A1- 2010 024 527

## Description

### Field of the invention

The present invention relates to chromatography and more particularly to methods and systems for performing chromatography while simultaneously performing washing of one or more chromatography columns in a chromatography system comprising a plurality of columns. More specifically the invention relates to the parallel washing of a column in a simulated moving bed chromatography system while it is performing size exclusion chromatography (SEC) or desalting.

### Background of the Invention

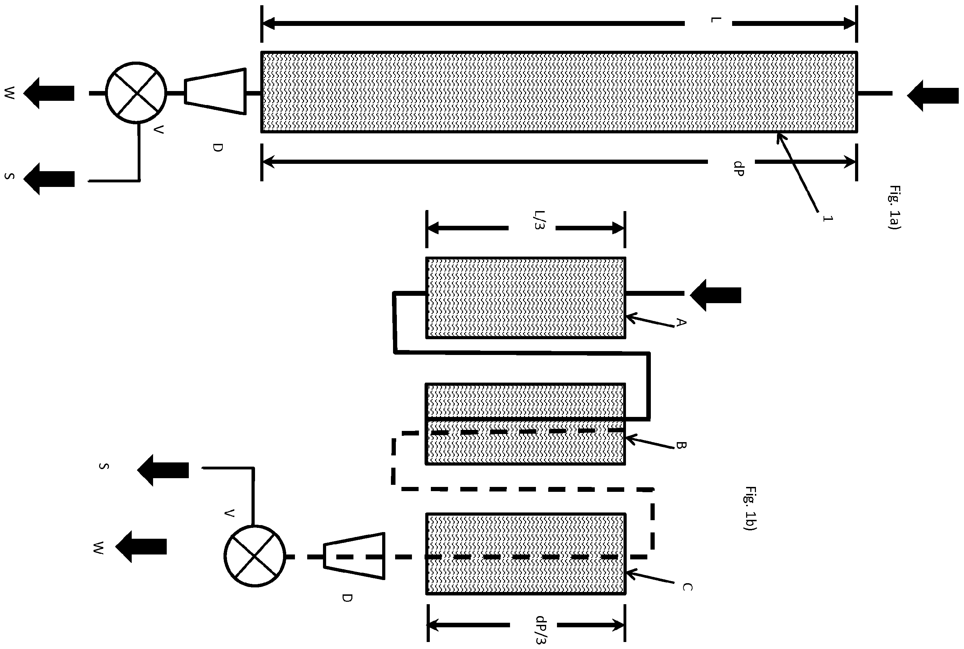

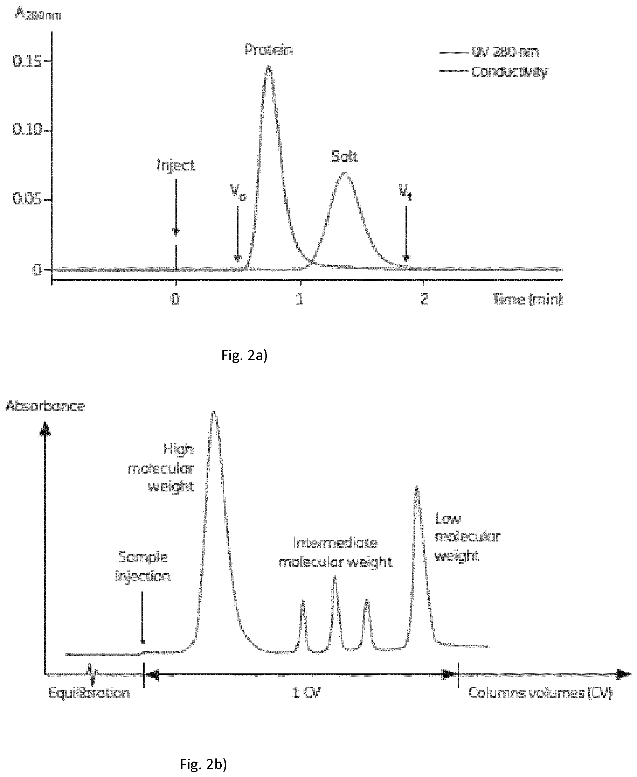

Size exclusion chromatography (SEC) separates molecules according to differences in size as they pass through a SEC medium in a column. SEC media consist of a porous matrix of spherical particles with chemical and physical stability and inertness (i.e. a lack of reactivity and adsorptive properties). To perform a separation, the medium is packed into a column to form a packed bed. The packed bed is equilibrated with buffer, which fills the pores of the matrix and the space between the particles. The liquid inside the pores, or stationary phase, is in equilibrium with the liquid outside the particles, or mobile phase. Small molecules enter the pores of the medium and are delayed, while large molecules which are too large to enter the medium pass through the column unobstructed. An example of the results of typical SEC run in which high molecular weight molecules leave a SEC column first and low molecular weight molecules leave the column last is shown in Figure 2b). Thus, unlike ion-exchange or affinity chromatography, the molecules do not bind to the chromatography medium so buffer composition does not directly affect resolution (the degree of separation between peaks of the molecules leaving the column). Consequently, a significant advantage of SEC is that conditions can be varied to suit the type of sample or the requirements for further purification, analysis, or storage without altering the separation. The longer the column the better resolution as the smaller molecules are delayed for increasing longer times as the length of a column increases, however the column has a larger backpressure and there are practical limitations to how long a column can be. A method known as simulated moving bed (SMB) is used to overcome this problem this is achieved by dividing the total desired length of a column into a plurality of columns which are connected in series. The pressure drop is thereby reduced to a fraction of that which would have been experienced over a single column with the same total length as the plurality of columns. Figures 1a) and 1b) shows a theoretical comparison between the pressure drop dP over a system comprising one long column 1 of length L (shown in figure 1a)) compared to the pressure drop over a system comprising three identical columns A, B, C (shown in figure 1b)) which have the same total length and volume as the single column. Fluid is supplied to the top of column 1, respectively column A and is extracted from the base of column 1, respectively column 3. The extracted fluid passes through a detector D and then through a valve which can direct the fluid to a waste pathway W or to storage S. The valve is controlled by detector D - when detector D detects the presence of target molecules the valve can be controlled to deliver the fluid to waste or storage as appropriate. As can be clearly seen, the total length of columns A, B, C being the same as that of column 1, the theoretical pressure drop over each of the three columns A-C is only one third of that over the single column 1. However as only two columns need to be connected in series at any time (for example columns A and B as shown by the solid line, and columns B and C as shown by the dashed line) then the actual pressure drop during the chromatography run is 2/3dP.

Samples are normally eluted isocratically so there is no need to use different buffers during the separation. However, a wash step (also known as washing-in-place (CIP)) using the running buffer or an alkaline solution is usually included at the end of a separation to remove molecules that might have been retained on the column and to prepare the column for a new run. Such a washing step takes time as the separation medium needs to be subjected to the washing fluid for a certain length of time, for example 10 minutes, and the column is unavailable for use until the washing step is completed.

WO 97/01755 A2 relates to an automated continuous multidimensional method for obtaining physicochemical data characteristic of a candidate ligand using hi-flux screening of natural and synthetic libraries to select ligands having desired affinity for target molecule of interest.

WO 2008/048395 A1 relates to small-scale simulated moving bed chromatography.

EP 1 775 001 A1 relates to chromatographic separation for purification of biopharmaceutical products.

US 2004/241878 A1 relates to purifying polypeptides by simulated moving bed chromatography.

### Brief Description of the Invention

The invention is as claimed.

In one aspect the present invention relates to a chromatography system comprising a plurality of substantially identically packed size exclusion chromatography columns for use in a method according to the invention.

In another aspect the present invention provides a method of operating a size exclusion chromatography system in which separation can take place in parallel with a wash step.

### Brief Description of the Figures

Figure 1a) shows schematically a single column.
Figure 1b) shows schematically a system comprising a plurality of columns, arranged in series, with the same total length as the column in figure 1a).
Figure 2a) shows a typical graph of absorption of UV-light with a wavelength of 280 nm against time for a SEC run in a SEC column, respectively conductivity against time for a desalting run in a desalting column.
Fig 2b) shows a typical graph of absorbance against column volumes passed through a SEC column.
Figure 3a) shows schematically an example of a SEC or desalting system in accordance with the present invention.
Figure 3b) shows a schematic enlarged view of the multi-position valve of figure 3a).
Figures 4-7 show steps in a method according to the present invention comprising a plurality of cycles using the system of figure 3.
Figures 8-11 show steps in another method according to the present invention comprising a plurality of cycles using the system of figure 3.

### Detailed Description of the Invention

The present invention is as defined in the claims and also relates to a method of using size exclusion chromatography to separate at least one target molecule or group of target molecules (called simply "target" in the following for brevity) from a sample in a simulated moving bed chromatography system (SMB system) comprising a plurality of SEC medium-containing columns, in which during the separation process at least one medium-containing column in the system is washed.

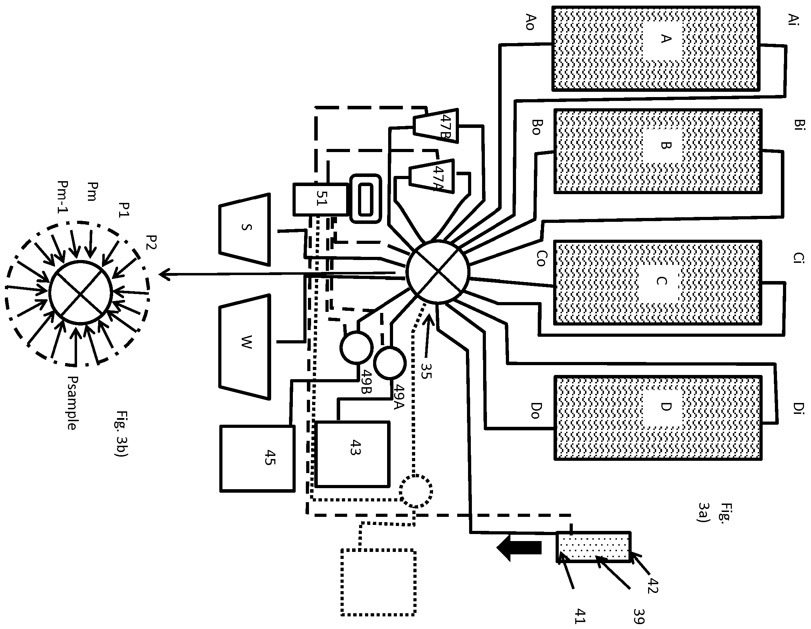

One embodiment of such a system is shown schematically in Figure 3. The system 30 comprises, in this embodiment, four chromatography columns A, B, C, D. Each column contains a separation medium (33). Preferably the columns have substantially identical performance and preferably the same separation medium and packing protocol is used in every column. Having substantially identical columns ensures that the result of a chromatography cycle is independent on which order the columns are used in. Each column follows convention and has an inlet Ai, Bi, Ci, Di at one end and an outlet Ao, Bo, Co, Do at the opposite end. The system comprises a multi-position valve arrangement 35 which comprises a plurality of ports P1, P2..., Pm, each of which can be connected by a fluid line to one of the other components in the system. Each inlet and outlet of the columns is connectable to an individual one port of the multi-position valve 35 by fluid lines. Valve 35 can be arranged to connect the outlet of any column to the inlet of any other column, e.g. the outlet Ao of column A to the inlet Bi of column B. In this way a fluid in any column can be transferred in series to any other column. The valve is further arranged so that buffer can be provided simultaneously to the inlets of two or more of the other columns and washing fluid to the inlet of the remaining column. This can be achieved by for example valve 35 having a rotor with internal passages which can be rotated in a stator to provide the required connection between ports of the valve.

The system is provided with a sample or other fluid 39 (called "sample" for brevity in the following) containing the target 41 and a syringe or container and pump or a gravity-fed line 42 or other means for feeding the sample to the fluid line or other inlet to a sample-introducing port 'Psample' of the valve.

The system further comprises a source of buffer fluid 43 connectable to a buffer inlet port of the valve, a source of washing fluid 45, for example a solution of sodium hydroxide, connectable to a washing fluid inlet port of the valve, a first sensor line comprising a first sensor 47A connectable to an inlet port and a detector outlet port of the valve, a second sensor line comprising a second sensor 47B connectable to an inlet port and a detector outlet port of the valve. The sensors 47A, 47B can be any type of appropriate sensor, for example for the detection of proteins they can be a UV absorption detector sensitive to one UV-light wavelength or , preferably, two or more UV-light wavelengths. Such UV detectors are well known in the art and detect the absorption by proteins of UV light passing through the fluid. In the event that the system is to be used for other purposes, for example desalting, a sensor could be a conductivity sensor of the type well known in the art. Pumps 49A, 49B or other fluid driving means, e.g. gravity, are provided to enable the flow of buffer fluid and washing fluid to the respective ports of the multi-position valve 35. Multi-position valve 35 is further provided with one outlet port which leads to a waste pathway W and a further outlet which leads to a target collecting vessel S or pathway. Control means 51 such as a computer, microprocessor, control circuit with appropriate software, or manually operated control means 51 are provided to control the multi-position valve and pumps in order to achieve the desired flow of sample through the system. It will be appreciated that the system shown in Figure 3b) illustrates schematically various components, which individually are known, so a detailed description of their construction has not been included here. Further, alternative components which would provide acceptable performance would be apparent to the skilled addressee. For example, the use of a multi-position valve 35 is preferred because that valve arrangement provides a compact valve, but that multi-position valve could be replaced with an array of individually on/off, opened/closed type valves, for example to provide an overall lower cost valve arrangement were the system to be manufactured as disposable hardware. In that case, simple fluid pressure activated membrane valves could be used, or solenoid operated valves could be employed, all with equal effect to the multi-position valve described herein. Such an alternative valve array would be controlled by the control means 51 so that the valves open and close in the correct order to provide the desired flow path(s) described below.

In order to achieve good resolution of the target and to maximize utilization of the chromatography system method are provided comprising at least one separation cycle in accordance with the steps described below which can be carried out manually or by using the control means and appropriate software and hardware to control the pump(s) and valve(s). The methods are intended to ensure that when the columns are used for a plurality of cycles each column is subjected to approximately the same wear, i.e. that each column is utilized equally, and that during the washing step the medium in each column is exposed to the washing fluid for an adequate length of time to ensure enough washing. This is achieved by providing washing fluid to at least one column at the same time as the target is flowing in and/or between two other columns. Switching of the flow between columns is initiated by studying the signal produced by the sensor positioned in the fluid line connecting the outlet from a first column to the inlet of a second column. When the signal indicates that the target has left the first column and sufficient time has elapsed for it to enter the second column, the multi-position valve is activated to connect the inlet of the second column to the supply of buffer and the outlet of the second column to the inlet of the third column in the series. This causes the target to pass through the second column and into the third column. At the same time a wash buffer can be inputted into the first column via its inlet, while the outlet of the first column is connected to waste. This provides the advantage that undesired smaller molecules which have been delayed in the column are directly sent to waste with passing through any subsequent columns, thereby reducing the load on these columns. In one example of the method the target can be separated in a cycle which comprises passing the sample in series through all but one of the plurality of columns, for example, three out of four columns.

The method can be adapted for substantially continuous use, so that as soon as a target from one sample which was initially loaded onto a first column has been separated and collected, the system is ready to be loaded with a new sample onto a column which is not the same as the previous column which initially received the previous sample. Preferably the loading of samples is arranged so that each column in turn initially receives a sample before loading of a sample recommences with the first column. This means that the columns are subjected to approximately the same wear.

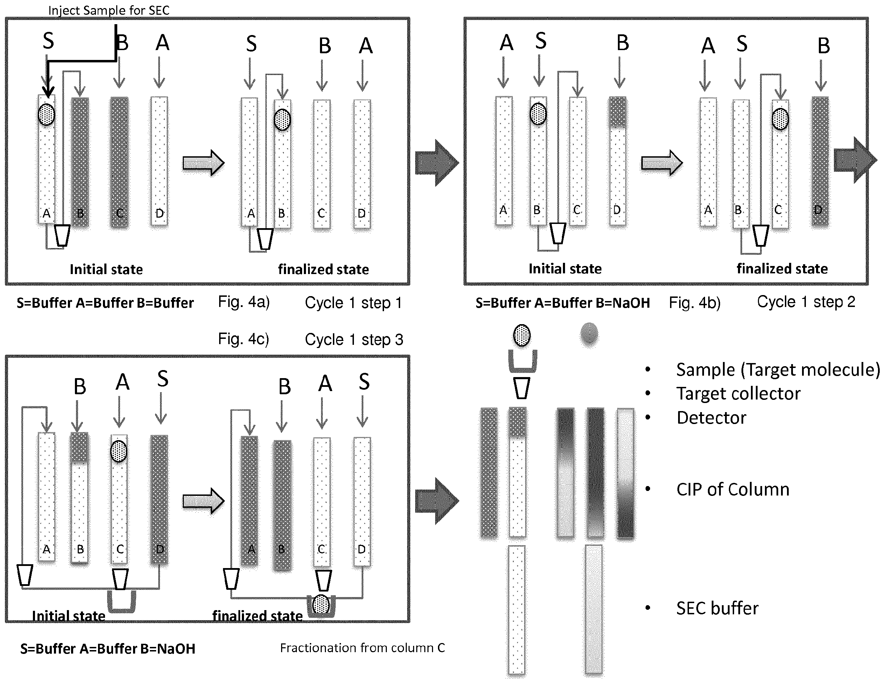

An example of a method for size exclusion chromatography to separate a target from a sample in which samples can be loaded in a series of cycles in which each series comprises four cycles and in each cycle a sample is loaded onto a different column is illustrated in figures 4 to 7. Each cycle comprises three steps.

Figure 4a) shows the initial and final states of the four columns in the first step of the first cycle. In the initial state of the first step of the first cycle, as shown on the left in figure 4a), columns A and D are filled with buffer and columns B and C are filled with washing fluid, for example NaOH. The multi-position valve is arranged so that inlets of columns A, C and D are connected to a flow of buffer, the outlet of column A is connected via a UV-detector to the inlet of column B and the outlets of columns B, C and D are connected to waste. This first step is started by the sample being injected into the flow of buffer entering the inlet of column A. This causes the sample to travel through column A. The detector monitors the fluid exiting column A and when a signal is detected which indicates that the target has passed the detector and has entered column B the first step of the first cycle is completed. This is shown in the finalized state on the right of figure 4a). The multi-position valve is then adjusted so that the second step of the first cycle can commence.

In the initial state of the second step of the first cycle, as shown on the left in figure 4b), all the columns are filled with buffer. The multi-position valve is arranged so that inlets of columns A and B are connected to a flow of buffer, the inlet of column D is connected to a flow of washing fluid, the outlet of column B is connected via a UV-detector to the inlet of column C and the outlets of columns A, C and D are connected to waste. This second step is started and the flow of buffer entering the inlet of column B causes the target to travel through column B and into column C. The detector monitors the fluid exiting column B and when a signal is detected which indicates that the target has passed the detector and has entered column C the second step of the first cycle is completed. This is shown in the finalized state on the right of figure 4b). The multi-position valve is then adjusted so that the third step of the first cycle can commence.

In the initial state of the third and final step of the first cycle, as shown on the left in figure 4c), columns A, B, and C are filled with buffer, while column D is filled with washing fluid. The multi-position valve is arranged so that inlets of columns C and D are connected to a flow of buffer, the inlet of column B is connected to a flow of washing fluid, the outlet of column D is connected via a UV-detector to the inlet of column A, the outlets of columns A and B are connected to waste while the outlet of column C is connected via a second detector to an outlet valve (not shown) which can direct the fluid leaving column C to either waste or a container for collecting the target Initially this outlet valve directs the fluid leaving column C to waste. This third step is started and the flow of buffer entering the inlet of column C causes the target to travel through column C. Once the second detector detects the presence of the target molecule in the fluid leaving column C, the outlet valve is operated to direct the flow to the container for collecting the target and the target is collected. Once the target has been collected step 3 the third step of the first cycle is completed. This is shown in the finalized state on the right of figure 4c).

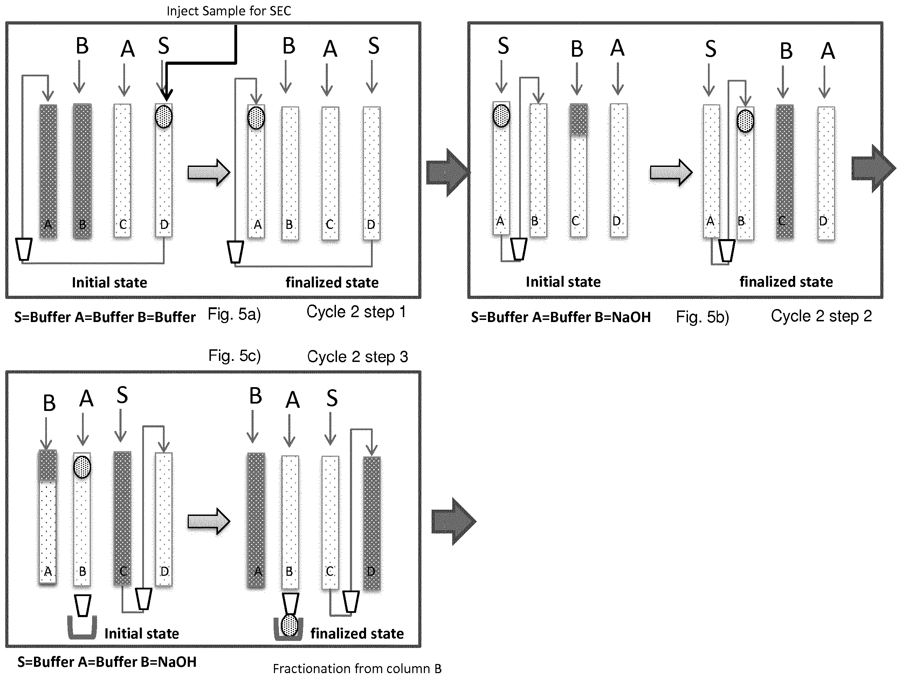

If a further separation is to take place on the system then a second cycle can start. The steps of this cycle are shown in figures 5a) to 5c).

Figure 5a) shows the initial and final states of the four columns in the first step of the second cycle. In the initial state of the first step of the second cycle, as shown on the left in figure 5a), columns C and D are filled with buffer and columns A and B are filled with washing fluid. The multi-position valve is arranged so that inlets of columns B, C and D are connected to a flow of buffer, the outlet of column D is connected via a UV-detector to the inlet of column A and the outlets of columns A, B and C are connected to waste. This first step is started by the sample being injected into the flow of buffer entering the inlet of column D. This causes the sample to travel through column D. The detector monitors the fluid exiting column D and when a signal is detected which indicates that the target has passed the detector and has entered column A the first step of the first cycle is completed. This is shown in the finalized state on the right of figure 5a). The multi-position valve is then adjusted so that the second step of the second cycle can commence.

In the initial state of the second step of the second cycle, as shown on the left in figure 5b), all the columns are filled with buffer. The multi-position valve is arranged so that inlets of columns A and D are connected to a flow of buffer, the inlet of column C is connected to a flow of washing fluid, the outlet of column A is connected via a UV-detector to the inlet of column B and the outlets of columns B, C and D are connected to waste. This second step is started and the flow of buffer entering the inlet of column A causes the target to travel through column A and into column B. The detector monitors the fluid exiting column A and when a signal is detected which indicates that the target has passed the detector and has entered column B the second step of the second cycle is completed. This is shown in the finalized state on the right of figure 5b). The multi-position valve is then adjusted so that the third step of the second cycle can commence.

In the initial state of the third and final step of the second cycle, as shown on the left in figure 5c), columns A, B, and D are filled with buffer, while column C is filled with washing fluid. The multi-position valve is arranged so that inlets of columns B and C are connected to a flow of buffer, the inlet of column A is connected to a flow of washing fluid, the outlet of column C is connected via a UV-detector to the inlet of column D, the outlets of columns A and D are connected to waste while the outlet of column B is connected via a second detector to an outlet valve (not shown) which can direct the fluid leaving column B to either waste or a container for collecting the target Initially this outlet valve directs the fluid leaving column B to waste. This third step is started and the flow of buffer entering the inlet of column B causes the target to travel through column B. Once the second detector detects the presence of the target molecule in the fluid leaving column B, the outlet valve is operated to direct the flow to the container for collecting the target and the target is collected. Once the target has been collected step 3 the third step of the second cycle is completed. This is shown in the finalized state on the right of figure 5c).

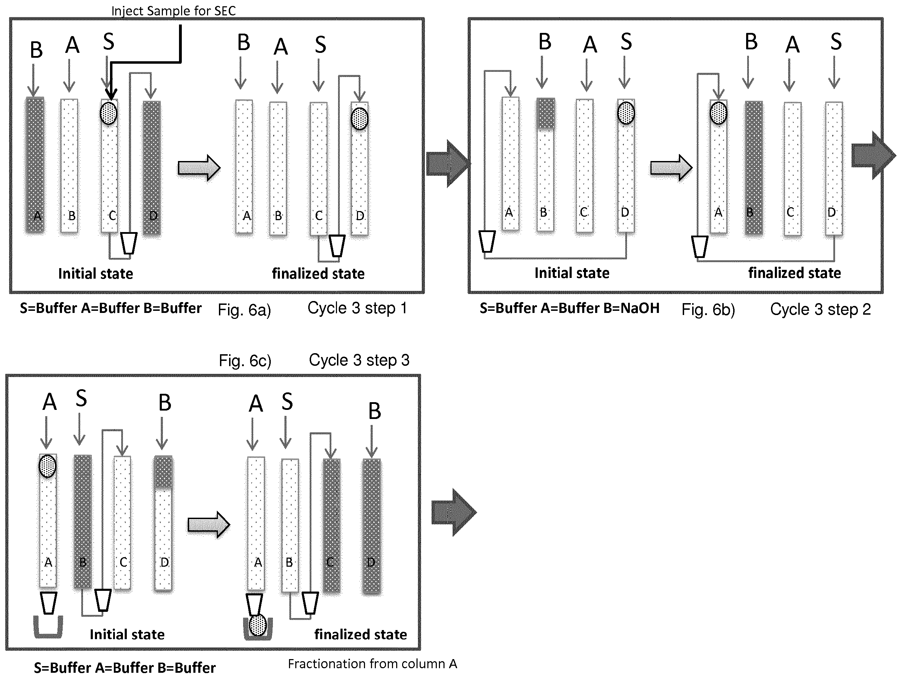

If a further separation is to take place on the system then a third cycle can start. The steps of this cycle are shown in figures 6a) to 6c).

Figure 6a) shows the initial and final states of the four columns in the first step of the third cycle. In the initial state of the first step of the third cycle, as shown on the left in figure 6a), columns B and D are filled with buffer and columns A and D are filled with washing fluid. The multi-position valve is arranged so that inlets of columns A, B, and C are connected to a flow of buffer, the outlet of column C is connected via a UV-detector to the inlet of column D and the outlets of columns A, B and D are connected to waste. This first step is started by the sample being injected into the flow of buffer entering the inlet of column C. This causes the sample to travel through column C. The detector monitors the fluid exiting column C and when a signal is detected which indicates that the target has passed the detector and has entered column D the first step of the first cycle is completed. This is shown in the finalized state on the right of figure 6a). The multi-position valve is then adjusted so that the second step of the third cycle can commence.

In the initial state of the second step of the third cycle, as shown on the left in figure 6b), all the columns are filled with buffer. The multi-position valve is arranged so that inlets of columns C and D are connected to a flow of buffer, the inlet of column B is connected to a flow of washing fluid, the outlet of column D is connected via a UV-detector to the inlet of column A and the outlets of columns A, B and C are connected to waste. This second step is started and the flow of buffer entering the inlet of column D causes the target to travel through column D and into column A. The detector monitors the fluid exiting column D and when a signal is detected which indicates that the target has passed the detector and has entered column A the second step of the third cycle is completed. This is shown in the finalized state on the right of figure 6b). The multi-position valve is then adjusted so that the third step of the third cycle can commence.

In the initial state of the third and final step of the third cycle, as shown on the left in figure 6c), columns A, C, and D are filled with buffer, while column B is filled with washing fluid. The multi-position valve is arranged so that inlets of columns A and B are connected to a flow of buffer, the inlet of column D is connected to a flow of washing fluid, the outlet of column B is connected via a UV-detector to the inlet of column C, the outlets of columns C and D are connected to waste while the outlet of column A is connected via a second detector to an outlet valve (not shown) which can direct the fluid leaving column A to either waste or a container for collecting the target Initially this outlet valve directs the fluid leaving column A to waste. This third step is started and the flow of buffer entering the inlet of column A causes the target to travel through column A. Once the second detector detects the presence of the target molecule in the fluid leaving column A, the outlet valve is operated to direct the flow to the container for collecting the target and the target is collected. Once the target has been collected step 3 the third step of the third cycle is completed. This is shown in the finalized state on the right of figure 6c).

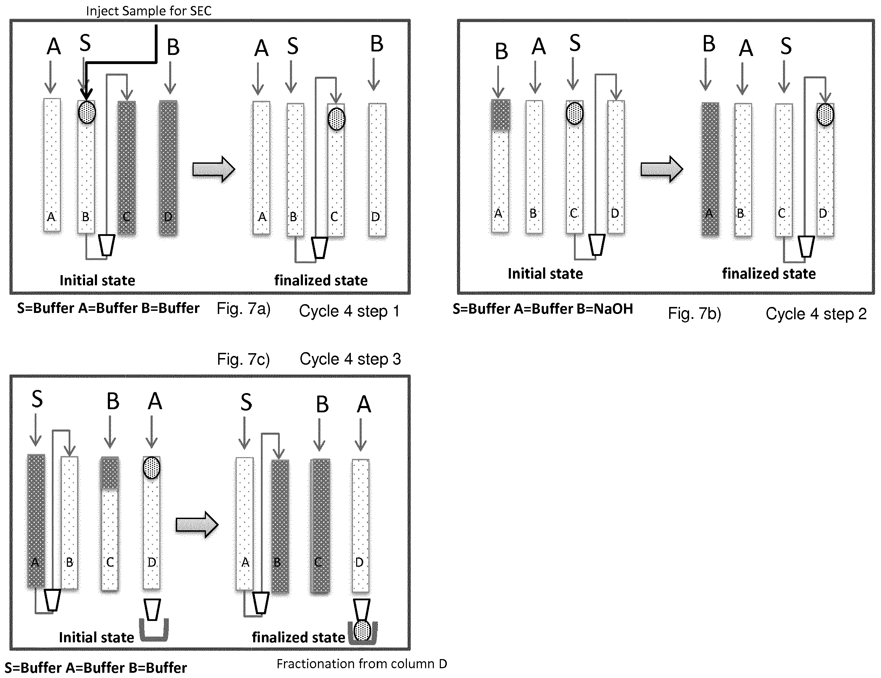

If a further separation is to take place on the system then a fourth cycle can start. The steps of this cycle are shown in figures 7a to 7c).

Figure 7a) shows the initial and final states of the four columns in the first step of the fourth cycle. In the initial state of the first step of the fourth cycle, as shown on the left in figure 7a), columns A and B are filled with buffer and columns C and D are filled with washing fluid. The multi-position valve is arranged so that inlets of columns A, B, and D are connected to a flow of buffer, the outlet of column B is connected via a UV-detector to the inlet of column C and the outlets of columns A, C and D are connected to waste. This first step is started by the sample being injected into the flow of buffer entering the inlet of column B. This causes the sample to travel through column B. The detector monitors the fluid exiting column B and when a signal is detected which indicates that the target has passed the detector and has entered column C the first step of the first cycle is completed. This is shown in the finalized state on the right of figure 7a). The multi-position valve is then adjusted so that the second step of the fourth cycle can commence.

In the initial state of the second step of the fourth cycle, as shown on the left in figure 7b), all the columns are filled with buffer. The multi-position valve is arranged so that inlets of columns B and C are connected to a flow of buffer, the inlet of column A is connected to a flow of washing fluid, the outlet of column C is connected via a UV-detector to the inlet of column D and the outlets of columns A, B and D are connected to waste. This second step is started and the flow of buffer entering the inlet of column C causes the target to travel through column C and into column D. The detector monitors the fluid exiting column C and when a signal is detected which indicates that the target has passed the detector and has entered column D the second step of the fourth cycle is completed. This is shown in the finalized state on the right of figure 7b). The multi-position valve is then adjusted so that the third step of the fourth cycle can commence.

In the initial state of the third and final step of the fourth cycle, as shown on the left in figure 7c), columns B, C, and D are filled with buffer, while column A is filled with washing fluid. The multi-position valve is arranged so that inlets of columns A and D are connected to a flow of buffer, the inlet of column C is connected to a flow of washing fluid, the outlet of column A is connected via a UV-detector to the inlet of column B, the outlets of columns B and C are connected to waste while the outlet of column D is connected via a second detector to an outlet valve (not shown) which can direct the fluid leaving column D to either waste or a container for collecting the target Initially this outlet valve directs the fluid leaving column D to waste. This third step is started and the flow of buffer entering the inlet of column D causes the target to travel through column D. Once the second detector detects the presence of the target molecule in the fluid leaving column D, the outlet valve is operated to direct the flow to the container for collecting the target and the target is collected. Once the target has been collected step 3 the third step of the fourth cycle is completed. This is shown in the finalized state on the right of figure 7c).

During the four cycles each column has been used once for the initial injection of a sample and has been used once for the final fractionation of the target. Thus, the load on each column has been substantially equal.

If a further separation is to take place on the system then a new series of cycles can start. As the contents of the columns in the finalized state of the fourth cycle, namely buffer in columns A and D and washing fluid in columns B and C, is the same as contents of the columns in the initial state of the first cycle, the new series of cycles preferably follow the same order as the previous series of cycles.

In a general method according to the present invention using four chromatography column of which three are to be exposed to a target in a separation cycle, in the first step in the cycle the sample which contains a target, for example proteins, which are to be separated from other molecules in the sample is loaded in a first out of the four columns and subsequently transported to a clean second column while the third and fourth columns are being flushed with a buffer.

Once the target has been detected in the fluid line between the first and second columns and has entered the second column the second step of the cycle commences: the multi-position valve is operated so that the second column is connected in series to a third column and the target is transported to the third column while the first column is flushed with buffer and the fourth column cleaned with the washing solution.

Once the target has been detected in the fluid line between the second and third column and has entered the third column the third step in the cycle commences: the valve is operated so that the fourth column is connected in series to the first column and the washing fluid from column 4 fed into the first column, while the target molecules are transported through the third column. Washing fluid is also fed into the second column. Initially the outlet of the third column is connected via a sensor to the waste. Once the sensor detects the target the output from the sensor is switched to a target collecting vessel and the target is collected there. At the same time the first column is cleaned with washing solution from the fourth column while the third and fourth columns are flushed with buffer.

When further separations are to be performed then each one starts by injection of the sample into the last column which has been filled with buffer after a washing step.

In a second example of a method according to the invention, the target can be separated in a cycle which comprises passing the sample in series through all of the plurality of columns, for example, four out of four columns.

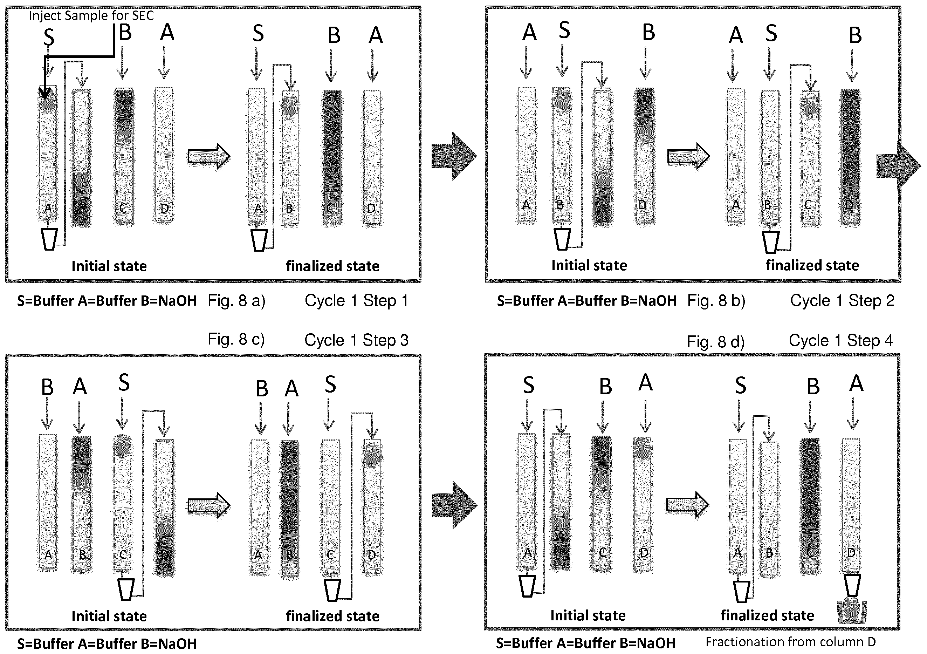

An example of a method for size exclusion chromatography to separate a target from a sample in which samples can be loaded in a series of cycles in which each series comprises four cycles and in each cycle a sample is loaded onto a different column is illustrated in figures 8 to 11. Each cycle uses all four of the columns to achieve high resolution and each cycle comprises four steps.

Figure 8a) shows the initial and final states of the four columns in the first step of the first cycle. In the initial state of the first step of the first cycle, as shown on the left in figure 8a), columns A and D are filled with buffer and column C is being filled with washing fluid, for example NaOH and column B is being flushed with buffer from column A to remove washing fluid. The multi-position valve is arranged so that inlets of columns A and D are connected to a flow of buffer, the inlet of column C is connected to a flow of washing fluid, the outlet of column A is connected via a UV-detector to the inlet of column B and the outlets of columns B, C and D are connected to waste. This first step is started by the sample being injected into the flow of buffer entering the inlet of column A. This causes the sample to travel through column A. The detector monitors the fluid exiting column A and when a signal is detected which indicates that the target has passed the detector and has entered column B the first step of the first cycle is completed. This is shown in the finalized state on the right of figure 8a) where column C is now substantially filled with washing fluid. The multi-position valve is then adjusted so that the second step of the first cycle can commence.

Shortly after the initial state of the second step of the first cycle, as shown on the left in figure 8b), columns A and B are filled with buffer, column D has started to be filled with washing fluid and column C has started to be emptied of washing fluid. Thus the multi-position valve is arranged so that inlets of columns A and B are connected to a flow of buffer, the inlet of column D is connected to a flow of washing fluid, the outlet of column B is connected via a UV-detector to the inlet of column C and the outlets of columns A, C and D are connected to waste. As this second step progresses the flow of buffer entering the inlet of column B causes the target to travel through column B and into column C. The detector monitors the fluid exiting column B and when a signal is detected which indicates that the target has passed the detector and has entered column C the second step of the first cycle is completed. This is shown in the finalized state on the right of figure 8b) where column C is now substantially filled with washing fluid. The multi-position valve is then adjusted so that the third step of the first cycle can commence.

Shortly after the initial state of the third step of the first cycle, as shown on the left in figure 8c), columns A and C are filled with buffer, column B has started to be filled with washing fluid while column D, which was filled with washing fluid, is being flushed with the contents from column C. The multi-position valve is arranged so that inlets of columns A and C are connected to a flow of buffer, the inlet of column B is connected to a flow of washing fluid, the outlet of column C is connected via a UV-detector to the inlet of column D, the outlets of columns A, B and D are connected to waste. The detector monitors the fluid exiting column C and when a signal is detected which indicates that the target has passed the detector and has entered column D the third step of the first cycle is completed. This is shown in the finalized state on the right of figure 8c) where column B is now substantially filled with washing fluid. The multi-position valve is then adjusted so that the fourth step of the first cycle can commence.

Shortly after the initial state of the fourth step of the first cycle, as shown on the left in figure 8d), columns A, and D are filled with buffer, while column B which was filled with washing fluid is being flushed with buffer and column C is being filled with washing fluid. The multi-position valve is arranged so that inlets of columns A and D are connected to a flow of buffer, the inlet of column C is connected to a flow of washing fluid, the outlet of column A is connected via a UV-detector to the inlet of column B, the outlets of columns B and C are connected to waste. while the outlet of column D is connected via a second detector to an outlet valve (not shown) which can direct the fluid leaving column D to either waste or a container for collecting the target Initially this outlet valve directs the fluid leaving column D to waste. Once this step is started the flow of buffer entering the inlet of column D causes the target to travel through column D. Once the second detector detects the presence of the target molecule in the fluid leaving column D, the outlet valve is operated to direct the flow to the container for collecting the target and the target is collected. Once the target has been collected the fourth step of the first cycle is completed. This is shown in the finalized state on the right of figure 8d) where column C is now substantially filled with washing fluid.

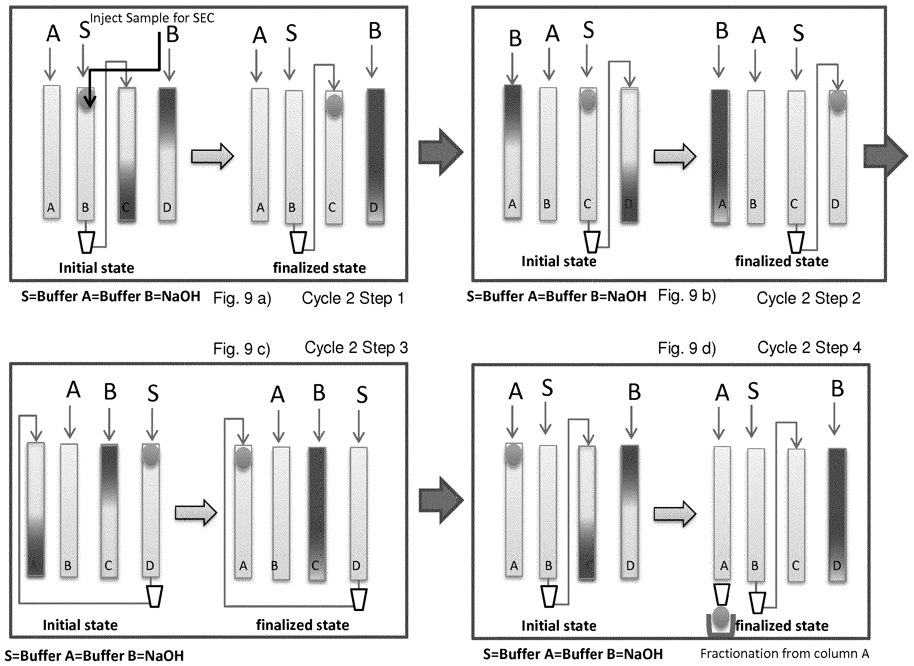

If a further separation is to take place on the system then a second cycle can start. The steps of this cycle are shown in figures 9a) to 9d).

Figure 9a) shows the initial and final states of the four columns in the first step of the second cycle. The multi-position valve is arranged so that inlets of columns A and B are connected to a flow of buffer, column D is connected to a flow of washing fluid, the outlet of column B is connected via a UV-detector to the inlet of column C and the outlets of columns A, C and D are connected to waste. After starting the first step of the second cycle, as shown on the left in figure 9a), columns A and B are filled with buffer, column D which was full of buffer is being filled with washing fluid and column C which was filled with washing fluid is being filled with buffer. This first step is started by the sample being injected into the flow of buffer entering the inlet of column B. This causes the sample to travel through column B. The detector monitors the fluid exiting column B and when a signal is detected which indicates that the target has passed the detector and has entered column C the first step of the first cycle is completed. This is shown in the finalized state on the right of figure 9a). Columns A, B and C contain buffer and column D contains washing fluid. The multi-position valve is then adjusted so that the second step of the second cycle can commence.

In the second step of the second cycle shown in figure 9b) the multi-position valve is arranged so that inlets of columns B and C are connected to a flow of buffer, the inlet of column A is connected to a flow of washing fluid, the outlet of column C is connected via a UV-detector to the inlet of column D and the outlets of columns A, B and D are connected to waste. This second step is started and the flow of buffer entering the inlet of column C causes the target to travel through column C and into column D. After the second step of the second cycle has commenced, as shown on the left in figure 9b), columns B and C are filled with buffer, column D is being flushed of washing fluid and column A is being filled with washing fluid. The detector monitors the fluid exiting column C and when a signal is detected which indicates that the target has passed the detector and has entered column D the second step of the second cycle is completed. This is shown in the finalized state on the right of figure 9b). Columns B, C and D contain buffer and column A contains washing fluid. The multi-position valve is then adjusted so that the third step of the second cycle can commence.

In the third step of the second cycle, as shown in figure 9c), the multi-position valve is arranged so that inlets of columns B and D are connected to a flow of buffer, the inlet of column C is connected to a flow of washing fluid, the outlet of column D is connected via a UV-detector to the inlet of column A, the outlets of columns A,B and C are connected to waste. At the start of the step columns B, C and D are filled with buffer, while column C is filled with washing fluid. As shown on the left in figure 9c) once this third step is started the flow of buffer entering the inlet of column D causes the target to travel through column D. The detector monitors the fluid exiting column D and when a signal is detected which indicates that the target has passed the detector and has entered column A the third step of the second cycle is completed. This is shown in the finalized state on the right of figure 9c). Columns A, B, and D contain buffer, column C contains washing fluid and the target is in column A. The multi-position valve is then adjusted so that the fourth step of the second cycle can commence

In the fourth step of the second cycle, as shown in figure 9d), the multi-position valve is arranged so that inlets of columns A and B are connected to a flow of buffer, the inlet of column D is connected to a flow of washing fluid, the outlet of column B is connected via a UV-detector to the inlet of column C, the outlets of columns B and D are connected to waste and the outlet of column B is connected via a second detector to an outlet valve (not shown) which can direct the fluid leaving column B to either waste or a container for collecting the target. Initially this outlet valve directs the fluid leaving column B to waste. Once this step is started the flow of buffer entering the inlet of column B causes the target to travel through column B. Once the second detector detects the presence of the target molecule in the fluid leaving column B, the outlet valve is operated to direct the flow to the container for collecting the target and the target is collected. Once the target has been collected the fourth step of the first cycle is completed. At the start of the step columns A, B, and Dare filled with buffer, while column C is filled with washing fluid. As shown on the left in figure 9d) once this fourth step has started the flow of buffer entering the inlet of column A causes the target to travel through column A. Once the second detector detects the presence of the target molecule in the fluid leaving column A, the outlet valve is operated to direct the flow to the container for collecting the target and the target is collected. Once the target has been collected the fourth step of the second cycle is completed. This is shown in the finalized state on the right of figure 9d where columns A, B, and C contain buffer and column D contains washing fluid.

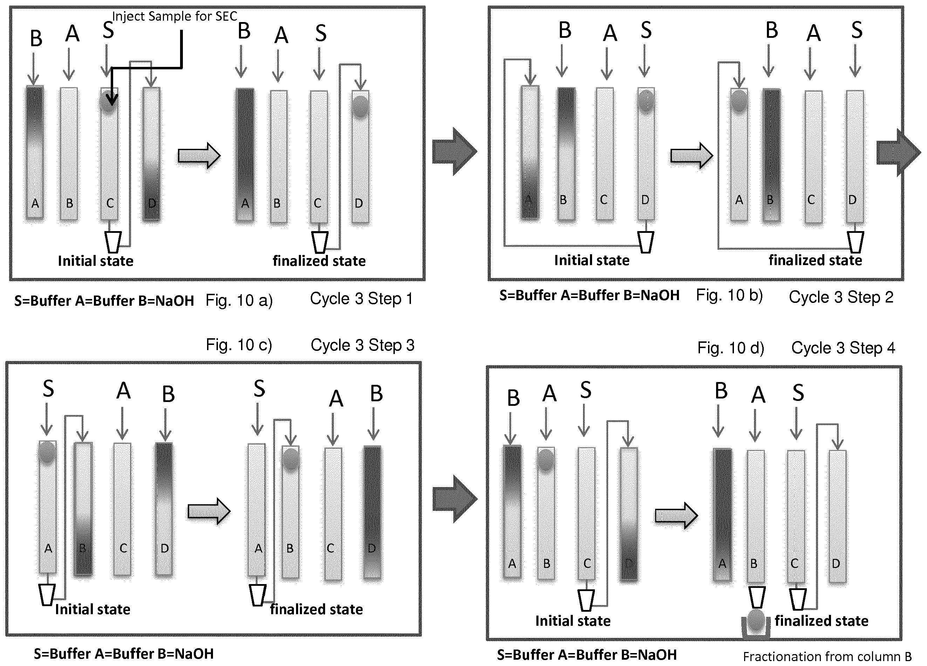

If a further separation is to take place on the system then a third cycle can start. The steps of this cycle are shown in figures 10a) to 10c). Figure 10a) shows the intermediate and final states of the four columns in the first step of the third cycle. The multi-position valve is arranged so that inlets of columns B and C are connected to a flow of buffer, column A is connected to a flow of washing fluid, the outlet of column C is connected via a UV-detector to the inlet of column D and the outlets of columns A, B and D are connected to waste. After starting the first step of the third cycle, as shown on the left in figure 10a), columns B and C are filled with buffer, column A which was full of buffer is being filled with washing fluid and column D which was filled with washing fluid is being filled with buffer. This first step is started by the sample being injected into the flow of buffer entering the inlet of column C. This causes the sample to travel through column C. The detector monitors the fluid exiting column C and when a signal is detected which indicates that the target has passed the detector and has entered column D the first step of the first cycle is completed. This is shown in the finalized state on the right of figure 10a). Columns B, C and D contain buffer and column A contains washing fluid. The multi-position valve is then adjusted so that the second step of the third cycle can commence.

In the second step of the third cycle the multi-position valve is arranged so that inlets of columns C and D are connected to a flow of buffer, the inlet of column B is connected to a flow of washing fluid, the outlet of column D is connected via a UV-detector to the inlet of column A and the outlets of columns A, B and C are connected to waste. This second step is started and the flow of buffer entering the inlet of column D causes the target to travel through column D and into column A. After the second step of the third cycle has commenced, as shown on the left in figure 10b), columns C and D are being filled with buffer and column B is being filled with washing fluid. The detector monitors the fluid exiting column D and when a signal is detected which indicates that the target has passed the detector and has entered column A the second step of the third cycle is completed. This is shown in the finalized state on the right of figure 10b) where column B is filled of washing fluid, the other columns contain buffer and the target is in column A. The multi-position valve is then adjusted so that the third step of the third cycle can commence.

In the third step of the third cycle, as shown in figure 10c), the multi-position valve is arranged so that inlets of columns A and C are connected to a flow of buffer, the inlet of column D is connected to a flow of washing fluid, the outlet of column A is connected via a UV-detector to the inlet of column B, the outlets of columns B, C and D are connected to waste. At the start of the step columns A, C and D are filled with buffer, while column B is filled with washing fluid. As shown on the left in figure 10c) once this third step is started the flow of buffer entering the inlet of column A causes the target to travel through column A. The detector monitors the fluid exiting column A and when a signal is detected which indicates that the target has passed the detector and has entered column B the third step of the third cycle is completed. The starting state of the columns for fourth step is shown in the finalized state on the right of figure 10c) with the target in column B. The multi-position valve is then adjusted so that the fourth step of the third cycle can commence

At the start of the fourth step columns A, B, and C are filled with buffer, while column D is filled with washing fluid. In the fourth step of the third cycle, as shown in figure 10d), the multi-position valve is arranged so that inlets of columns B and C are connected to a flow of buffer, the inlet of column A is connected to a flow of washing fluid, the outlet of column C is connected via a UV-detector to the inlet of column D, the outlets of columns A and D are connected to waste and the outlet of column B is connected via a second detector to an outlet valve (not shown) which can direct the fluid leaving column B to either waste or a container for collecting the target Initially this outlet valve directs the fluid leaving column B to waste. Once this step is started the flow of buffer entering the inlet of column B causes the target to travel through column B. Once the second detector detects the presence of the target molecule in the fluid leaving column B, the outlet valve is operated to direct the flow to the container for collecting the target and the target is collected. Once the target has been collected the fourth step of the first cycle is completed. This is shown in the finalized state on the right of figure 10d).

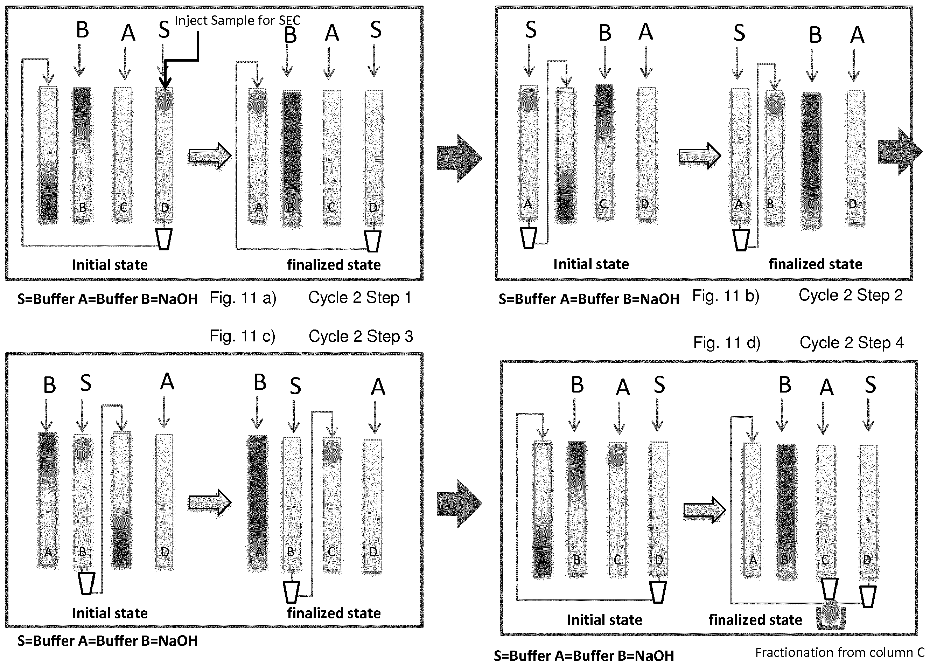

If a further separation is to take place on the system then a fourth cycle can start. The steps of this cycle are shown in figures 11a) to 11d). Figure 11a) shows the intermediate and final states of the four columns in the first step of the fourth cycle. Initially columns B, C and D are filled with buffer and column A is filled with washing fluid. The multi-position valve is arranged so that inlets of columns C and D are connected to a flow of buffer, column B is connected to a flow of washing fluid, the outlet of column D is connected via a UV-detector to the inlet of column A and the outlets of columns B, C and D are connected to waste. This first step is started by the sample being injected into the flow of buffer entering the inlet of column D. This causes the sample to travel through column D. After starting the first step of the third cycle, as shown on the left in figure 11a), columns C and D are filled with buffer, column A which was full of washing fluid is being filled with buffer and column B which was filled with buffer is being filled with washing fluid. The detector monitors the fluid exiting column D and when a signal is detected which indicates that the target has passed the detector and has entered column A the first step of the first cycle is completed. This is shown in the finalized state on the right of figure 11a). Columns A, C and D contain buffer and column B contains washing fluid. The target is in column A. The multi-position valve is then adjusted so that the second step of the fourth cycle can commence.

In the second step the multi-position valve is arranged so that inlets of columns A and D are connected to a flow of buffer, the inlet of column C is connected to a flow of washing fluid, the outlet of column A is connected via a UV-detector to the inlet of column B and the outlets of columns B, C and D are connected to waste. This second step is started and the flow of buffer entering the inlet of column A causes the target to travel through column A and into column B. After the second step of the third cycle has commenced, as shown on the left in figure 11b), columns A and D are being filled with buffer and column C is being filled with washing fluid. The detector monitors the fluid exiting column A and when a signal is detected which indicates that the target has passed the detector and has entered column B the second step of the fourth cycle is completed. This is shown in the finalized state on the right of figure 11b) with the target in column B, buffer in columns A and D, and washing fluid in column C. The multi-position valve is then adjusted so that the third step of the fourth cycle can commence.

In the third step of the fourth cycle, as shown in figure 11c), the multi-position valve is arranged so that inlets of columns B and D are connected to a flow of buffer, the inlet of column A is connected to a flow of washing fluid, the outlet of column B is connected via a UV-detector to the inlet of column C, the outlets of columns B, C and D are connected to waste. At the start of the step columns A, B and D are filled with buffer, while column C is filled with washing fluid. As shown on the left in figure 11c) once this third step is started the flow of buffer entering the inlet of column B causes the target to travel through column B. The detector monitors the fluid exiting column B and when a signal is detected which indicates that the target has passed the detector and has entered column C the third step of the fourth cycle is completed. The starting state of the columns for fourth step is shown in the finalized state on the right of figure 11c) where the target is in column C. The multi-position valve is then adjusted so that the fourth step of the fourth cycle can commence

At the start of the fourth step columns B, C, and D are filled with buffer, while column A is filled with washing fluid. In the fourth step of the fourth cycle, as shown in figure 11d), the multi-position valve is arranged so that inlets of columns C and D are connected to a flow of buffer, the inlet of column B is connected to a flow of washing fluid, the outlet of column D is connected via a UV-detector to the inlet of column A, the outlets of columns A and B are connected to waste and the outlet of column C is connected via a second detector to an outlet valve (not shown) which can direct the fluid leaving column C to either waste or a container for collecting the target Initially this outlet valve directs the fluid leaving column C to waste. Once this step is started the flow of buffer entering the inlet of column C causes the target to travel through column C. Once the second detector detects the presence of the target molecule in the fluid leaving column C, the outlet valve is operated to direct the flow to the container for collecting the target and the target is collected. Once the target has been collected the fourth step of the fourth cycle is completed. This is shown in the finalized state on the right of figure 11d).

If a further separation is to take place on the system then a new series of cycles can start. As the contents of the columns in the finalized state of the fourth cycle, namely buffer in columns A, B and C and washing fluid in column D, is the same as contents of the columns in the initial state of the first cycle, the new series of cycles preferably follow the same order as the previous series of cycles.

If four SEC or desalting cycles are performed in the order described above then each column has been used once for the initial injection of a sample and each column has been used once for the final fractionation of the target. Thus, the load on each column has been substantially equal over the four cycles. Thus in each set of four cycles using four columns the designation of each column can be considered to have been decreased by one in base four each time a new cycle starts, such that when starting the next cycle the second column (i.e. column B) is re-designated the first column (i.e. column A), the third column (column C) is re-designated the second column (column B), the fourth column (column D) is re-designated the third column (column C) and the first column (column A) is re-designated the fourth column (column D).

Thus, when N columns are used, then in each subsequent cycle in set of N cycles the designation of a column is decreased by one in base N. For example, in a system which uses three columns, N=3 and at the end of the first cycle column 1 is re-designated column 3, column 2 is re-designated column 1 and column 3 is re-designated column 2.

In a system with three columns (N=3) it is possible to use just two (N-1) of the columns for the SEC or desalting in which case each cycle has only two steps, namely a first step of passing the sample through the first column to a second column while washing the third column and a second step of collecting the target from the second column while flushing the third column with buffer and filling the first column with the washing fluid from the third column.

In a system with three columns (N=3) it is possible to use all three (N) of the columns for the SEC or desalting in which case each cycle has three steps, namely a first step of passing the sample through the first column to a second column while washing the third column, a second step of transporting the target from the second column to the third column while flushing the first column with washing fluid, and a third step of collecting the target from the third column when filling the second column with the washing fluid from the first column. A new cycle can then start from the first column. However, if the load on the columns is to be equalized then the next cycle should start with loading onto the second column. Preferably, in order to reduce the risk of the target coming into contact with the washing fluid in the second column, the loading of the sample should be delayed until after a suitable fraction, for example 20% or 25% or 50% or even more, of a column volume of buffer, has been passed into the second column.

In order to equalize the load on the columns it is of course possible to change the order of the columns by increasing or decreasing the designation of each column by any number which is lower than N as long as the steps of the cycles are amended correspondingly in order to ensure washing of a column is achieved between targets from two different samples entering the column.

One method in accordance with the present invention for performing size exclusion chromatography separation (SEC) or desalting of a target from a sample in a system comprises the following steps:
i) the step of providing a system with at least three columns (A, B, C,...) that are connectable, for example, with only one pair of the columns in series at the same time;
ii) the step of connecting in series a column containing the target with another column,
ii) the step of washing at least one further column with a washing fluid at the same time as the target is being transported by a flow of buffer from said column containing the target to said another column.

An additional step of the method comprises connecting the outlet of said another column to the inlet of the washed further column and subsequently collecting the target from the outlet of the washed column.

Alternative additional steps of the method comprise the steps of transporting the target in series from the outlet of said another column in any order through said washed further column and one or more additional columns, and finally collecting the target from the last additional column or the washed further column.

An example of a method in accordance with the invention for a size exclusion chromatography (SEC) or desalting system comprising four columns for separating a target from a sample, wherein the target passes through four columns before being collected,
comprises the steps of:
a)
   i) positioning the valve such that the inlet of a third column is connected to a supply of washing fluid, the outlet of a first column is connected to the inlet of a second column, the inlet of the first column and optionally the inlet of the fourth column is connected to the supply of said first buffer and the outlets of said second, third and fourth columns are directed to a waste arrangement,
   ii) arranging a detector between the outlet of the first column and the inlet of the second column,
   iii) injecting a sample S containing said target substance into the inlet of said first column;
   iv) subsequently pumping washing fluid into said third column and pumping first buffer into the inlet of at least said first column and optionally said fourth column, until the target molecule has passed said detector and entered the second column;
b)
   i) positioning the valve such that the outlet of said second column is connected to the inlet of said third column, the inlet of the second column and optionally the inlet of said first column is connected to the supply of said first buffer, the inlet of the fourth column is connected to the supply of washing fluid,
   ii) arranging said detector between the outlet of the second column and the inlet of the third column,
   iii) subsequently pumping washing fluid into said fourth column while pumping first buffer into at least the inlet of said second column until the target molecule has passed said detector and entered the third column;
c)
   i) connecting the outlet of said third column to the inlet of said fourth column, the inlet of the third column and optionally the inlet said second column is connected to the supply of said first buffer, the inlet of the first column is connected to the supply of washing fluid,
   ii) arranging said detector between the outlet of the third column and the inlet of the fourth column,
   iii) subsequently pumping washing fluid into said first column while pumping first buffer into at least the inlet of said third column until the target molecule has passed said detector and entered the fourth column,
d)
   i) connecting the outlet of said fourth column to valve means for diverting fluid to a waste arrangement or a target collection arrangement, the inlet of said third column is connected to the supply of washing fluid, the outlet of said first column is connected to the inlet of said second column, and the outlets of the second column and third column are connected to the waste arrangement;
   ii) arranging said first detector between the outlet of said first column and the inlet of said second column, and arranging said second detector between the outlet of the fourth column and the inlet of the collection arrangement,
   iii) pumping washing fluid into said third column and first buffer into the inlet of at least the fourth columns until the target molecule has passed said detector and entered the collection arrangement.

In all examples of methods according to the invention if it is determined that washing between each injection of a sample is not necessary, for example that it is possible to run a plurality of samples before washing the columns, then the methods can be provided with steps in which the washing fluid is replaced by buffer fluid or indeed no fluid at all,
The above description of the present disclosure is provided for the purpose of illustration, and it would be understood by those skilled in the art that various changes and modifications may be made without changing the concept and essential features of the present disclosure. Thus, it is clear that the above-described embodiments are illustrative in all aspects and do not limit the present disclosure.

The scope of the invention is defined by the following claims rather than by the detailed description of the embodiment. It shall be understood that all modifications and embodiments conceived from the meaning and scope of the claims are included in the scope of the present disclosure.

## Claims

1. A method for performing size exclusion chromatography separation, i.e. SEC, or desalting of a target (41) from a sample (39) in a system (30) comprising:
i) the step of providing a system (30) with at least three columns (A, B, C, D) at least two of which are connectable in series at the same time;
ii) the step of connecting in series a column (A, B, C, D) containing the target (41) with another of the columns,
iii) the step of washing at least one further column with a washing fluid (45) at the same time as the target is being transported by a flow of buffer (43) from said column containing the target (41) to said another of the columns,
wherein said at least three columns comprise four columns (A, B, C, D) for separating a target (41) from a sample,
wherein the target passes through three or four columns before being collected,
wherein each column has an inlet (Ai, Bi, Ci, Di) and an outlet (Ao, Bo, Co, Do) fluidly connected to a valve arrangement (35) for selectively simultaneously connecting said at least two chromatography columns in series and one of the other chromatography columns to flow of washing fluid (45),
wherein said valve arrangement (35) comprises a first inlet (P1) for inputting a buffer solution, a second inlet (P2) for inputting a washing fluid (45), an inlet for receiving fluid from said chromatography columns, and a first outlet leading to valve means for diverting fluid to a waste arrangement (W) or a target collection arrangement (S);
the system (30) further comprising:
a first detector (D) for detecting the presence of the target substance (41);
a second detector (D) for detecting the presence of the target substance (41);
one or more pumps (49A, 49B) for pumping buffer and washing fluid (43, 45);
a supply of a first buffer solution;
a supply of said washing fluid; and
a means (42) for injecting a sample (39) into a SEC column.

2. A method according to claim 1 further comprising the subsequent step of connecting the outlet (Ao, Bo, Co, Do) of said another column to the inlet (Ai, Bi, Ci, Di) of the washed further column and subsequently collecting the target (41) from the outlet (Ao, Bo, Co, Do) of the washed column.

3. A method according to claim 1 further comprising the steps of transporting the target (41) in series from the outlet (Ao, Bo, Co, Do) of said another column in any order through said washed further column and one or more additional columns, and finally collecting the target (41) from the last additional column or the washed further column.

4. A method according to any one of claim 1-3, further comprising the steps of:
a)
i) operating the valve arrangement (35) such that the inlet of a third column is connected to a supply of washing fluid, the outlet of a first column is connected to the inlet of a second column, the inlet of the first column and optionally the inlet of the fourth column is connected to the supply of said first buffer (43) and the outlets of said second, third and fourth columns are directed to a waste arrangement (W),
ii) arranging said detector (D) between the outlet of the first column and the inlet of the second column,
iii) injecting a sample S containing said target substance (41) into the inlet of said first column;
iv) subsequently pumping washing fluid (45) into said third column and pumping first buffer into the inlet of at least said first column and optionally said fourth column, until the target molecule has passed said detector and entered the second column;
b)
i) operating the valve arrangement (35) such that the outlet of said second column is connected to the inlet of said third column, the inlet of the second column and optionally the inlet of said first column is connected to the supply of said first buffer, the inlet of the fourth column is connected to the supply of washing fluid (45),
ii) arranging said detector (D) between the outlet of the second column and the inlet of the third column,
iii) subsequently pumping washing fluid (45) into said fourth column while pumping first buffer into at least the inlet of said second column until the target molecule has passed said detector and entered the third column;
c)
i) operating the valve arrangement (35) such that the outlet of said third column is connected to the inlet of said fourth column, the inlet of the third column and optionally the inlet said second column is connected to the supply of said first buffer, the inlet of the first column is connected to the supply of washing fluid,
ii) arranging said detector (D) between the outlet of the third column and the inlet of the fourth column,
iii) subsequently pumping washing fluid (45) into said first column while pumping first buffer into at least the inlet of said third column until the target molecule has passed said detector and entered the fourth column,
d)
i) operating the valve arrangement (35) such that the outlet of said fourth column is connected to valve means for diverting fluid to a waste arrangement (W) or a target collection arrangement (S), the inlet of said third column is connected to the supply of washing fluid, the outlet of said first column is connected to the inlet of said second column, and the outlets of the second column and third column are connected to the waste arrangement;
ii) arranging said first detector (D) between the outlet of said first column and the inlet of said second column, and arranging said second detector between the outlet of the fourth column and the inlet of the collection arrangement,
iii) pumping washing fluid (45) into said third column and first buffer (43) into the inlet of at least the fourth columns until the target molecule has passed said detector (D) and entered the collection arrangement (S).

5. A method in accordance with claim 1 or claim 2 for a size exclusion chromatography, i.e. SEC, or desalting system comprising four columns for separating a target (41) from a sample, wherein the target passes through three columns (A, B, C, D) before being collected, wherein each column has an inlet and an outlet, and is fluidly connectable to a valve arrangement (35), for example a multi-position valve, arranged for selectively simultaneously connecting only two of said chromatography columns in series and one of the other chromatography columns to flow of washing fluid (45), wherein said valve comprises a first inlet port for inputting a buffer solution, a second inlet port for inputting a washing fluid, inlet port for receiving fluid from said chromatography columns, a first outlet port leading to valve means for diverting fluid to a waste arrangement or a target collection arrangement;
the system further comprising
a first detector (D) for detecting the presence of the target substance (41),
a second detector (D) for detecting the presence of the target substance (41),
a plurality of pumps (49A, 49B) for pumping buffer and washing fluid;
a supply of a first buffer solution (43);
a supply of said washing fluid (45); and
a means (42) for injecting a sample into a SEC column,
wherein the method comprises the steps of:
a)
i) positioning the valve arrangement (35) such that the inlet of a third column is connected to a supply of washing fluid (45), the outlet of a first column is connected to the inlet of a second column, the inlet of the first column and optionally the inlet of the fourth column is connected to the supply of said first buffer (43) and the outlets of said second, third and fourth columns are directed to a waste arrangement (W),
ii) arranging said detector (D) between the outlet of the first column and the inlet of the second column,
iii) injecting a sample S containing said target substance (41) into the inlet of said first column;
iv) subsequently pumping washing fluid (45) into said third column and pumping first buffer into the inlet of at least said first column and optionally said fourth column, until the target molecule has passed said detector and entered the second column;
b)
i) positioning the valve arrangement (35) such that the outlet of said second column is connected to the inlet of said third column, the inlet of the second column and optionally the inlet of said first column is connected to the supply of said first buffer (43), the inlet of the fourth column is connected to the supply of washing fluid (45),
ii) arranging said detector (D) between the outlet of the second column and the inlet of the third column,
iii) subsequently pumping washing fluid (45) into said fourth column while pumping first buffer into at least the inlet of said second column until the target molecule has passed said detector and entered the third column;
c)
i) positioning the valve arrangement (35) such that the outlet of said third column is connected to valve means for diverting fluid to a waste arrangement or a target collection arrangement, the inlet of said third column is connected to the supply of buffer, the outlet of said fourth column is connected to the inlet of said first column, and the outlets of the first column and second column are connected to the waste arrangement;
ii) arranging said first detector (D) between the outlet of said fourth column and the inlet of said first column, and arranging said second detector between the outlet of the third column and the inlet of the collection arrangement;
iii) pumping washing fluid (45) into said second column and first buffer (43) into the inlet of at least the third column until the target molecule has passed said detector and entered the collection arrangement.

6. A method according to claim 4 or claim 5 comprising the step of:
repeating steps of the method wherein in each repetition the designation of each column (A, B, C, D) is decreased by one in base four, such that the second column is re-designated the first column, the first column is re-designated the fourth column, the third column is re-designated the second column and the fourth column is re-designated the third column.

7. A method of according to any of the previous claims wherein the flow rate into each column (A, B, C, D) is controlled to be substantially identical.

8. A chromatography system (30) comprising a plurality of columns (A, B, C, D) which are interconnectable for performing chromatographic separation **characterized in that** the system comprises:
at least three substantially identical SEC or desalting columns (A, B, C...) , each column having an inlet (Ai,Bi, Ci...) and an outlet (Ao, Bo, Co,...), and being fluidly connected to a valve arrangement (35) for selectively connecting only two of said chromatography columns in series at any time, wherein said valve arrangement (35) comprises a first inlet port for inputting a buffer solution (43), a second inlet port for inputting a buffer solution, a third inlet port for inputting a washing solution (45), a first outlet port leading to a waste arrangement (W), a second outlet port leading to a target collection arrangement (S), third, fourth and fifth outputs connectable simultaneously to three out of said at least three columns;
the system further comprising
a first sensor line for detecting the presence of the target substance comprising a first sensor (47A) connectable to an inlet port and a detector outlet port of the valve arrangement (35),
a second sensor line for detecting the presence of the target substance comprising a second sensor (47B) connectable to an inlet port and a detector outlet port of the valve arrangement (35),
a first pump (49A) for injecting fluid into said first inlet port;
a second pump (49B) for injecting fluid into said second inlet port;
a third pump for injecting fluid into said third inlet port;
a supply of a first buffer solution (43);
a supply of said washing solution (45); and
a means (42) for loading a sample into a column.

9. The system (30) according to claim 8 wherein the system comprises N columns (A, B, C, D) and is provided with control means (51) arranged to monitor the sensors (47A, 47B) and to control the pumps (49A, 49B) and means (42) for loading a sample (39) into a column.

10. The system (30) according to claim 9 wherein the control means (51) is adapted for performing a separation cycle wherein the separation cycle is arranged to be performed over N-1 columns in series and the remaining column is subjected to washing during the separation cycle.

11. The system (30) according to claim 9 wherein the control means (51) is adapted for performing a separation cycle wherein the separation cycle is arranged to be performed over N columns in series and at least one column is subjected to washing during the separation cycle.

12. The system (30) according to any of claims 8 to 11 wherein the columns (A, B, C, D) have substantially identical performance and preferably the same separation medium and packing protocol.

## Patentansprüche

1. Verfahren zur Durchführung einer Größenausschlusschromatographie-Trennung, d. h. SEC, oder Entsalzung eines Targets (41) aus einer Probe (39) in einem System (30), umfassend:
i) den Schritt des Bereitstellens eines Systems (30) mit mindestens drei Säulen (A, B, C, D), von denen mindestens zwei gleichzeitig in Reihe schaltbar sind;
ii) den Schritt, eine Säule (A, B, C, D), die das Target (41) enthält, mit einer anderen Säule in Reihe zu verbinden,
iii) den Schritt des Waschens mindestens einer weiteren Säule mit einer Waschflüssigkeit (45) zur gleichen Zeit, in der das Target durch einen Pufferfluss (43) von der Säule, die das Target (41) enthält, zu der anderen der Säulen transportiert wird,
wobei die mindestens drei Säulen vier Säulen (A, B, C, D) zur Abtrennung eines Targets (41) aus einer Probe umfassen,
wobei das Target drei oder vier Säulen durchläuft, bevor es aufgefangen wird,
wobei jede Säule einen Einlass (Ai, Bi, Ci, Di) und einen Auslass (Ao, Bo, Co, Do) aufweist, die in Fluidverbindung mit einer Ventilanordnung (35) stehen, um selektiv gleichzeitig die mindestens zwei Chromatographiesäulen in Reihe und eine der anderen Chromatographiesäulen mit dem Fluss der Waschflüssigkeit (45) zu verbinden,
wobei die Ventilanordnung (35) einen ersten Einlass (P1) zur Eingabe einer Pufferlösung, einen zweiten Einlass (P2) zur Eingabe einer Waschflüssigkeit (45), einen Einlass zur Aufnahme von Flüssigkeit von den Chromatographiesäulen und einen ersten Auslass umfasst, der zu einer Ventileinrichtung zur Ableitung von Flüssigkeit zu einer Abfallanordnung (W) oder einer Targetaufnahmeanordnung (S) führt;
wobei das System (30) weiter Folgendes umfasst:
einen ersten Detektor (D) zum Nachweis des Vorhandenseins der Targetsubstanz (41);
einen zweiten Detektor (D) zum Nachweis des Vorhandenseins der Targetsubstanz (41);
eine oder mehrere Pumpen (49A, 49B) zum Pumpen von Puffer- und Waschflüssigkeit (43, 45);
einen Vorrat an einer ersten Pufferlösung;
einen Vorrat der Waschflüssigkeit; und
eine Einrichtung (42) zur Injektion einer Probe (39) in eine SEC-Säule.

2. Verfahren nach Anspruch 1, umfassend den nachfolgenden Schritt des Verbindens des Auslasses (Ao, Bo, Co, Do) der anderen Säule mit dem Einlass (Ai, Bi, Ci, Di) der gewaschenen weiteren Säule und des anschließenden Aufnehmens des Targets (41) aus dem Auslass (Ao, Bo, Co, Do) der gewaschenen Säule.

3. Verfahren nach Anspruch 1, umfassend die Schritte des Transportierens des Targets (41) in Reihe vom Auslass (Ao, Bo, Co, Do) der anderen Säule in beliebiger Reihenfolge durch die gewaschene weitere Säule und eine oder mehrere zusätzliche Säulen, und schließlich des Aufnehmens des Targets (41) von der letzten zusätzlichen Säule oder der gewaschenen weiteren Säule.

4. Verfahren nach einem der Ansprüche 1 bis 3, das weiter die folgenden Schritte umfasst:
a)
i) Betreiben der Ventilanordnung (35), sodass der Einlass einer dritten Säule mit einem Vorrat an Waschflüssigkeit verbunden ist, der Auslass einer ersten Säule mit dem Einlass einer zweiten Säule verbunden ist, der Einlass der ersten Säule und gegebenenfalls der Einlass der vierten Säule mit dem Vorrat des ersten Puffers (43) verbunden ist und die Auslässe der zweiten, dritten und vierten Säule zu einer Abfallanordnung (W) geleitet werden,
ii) Anordnen des Detektors (D) zwischen dem Auslass der ersten Säule und dem Einlass der zweiten Säule,
iii) Injizieren einer Probe S, die die Targetsubstanz (41) enthält, in den Einlass der ersten Säule;
iv) anschließendes Pumpen von Waschflüssigkeit (45) in die dritte Säule und Pumpen von erstem Puffer in den Einlass von mindestens der ersten Säule und gegebenenfalls der vierten Säule, bis das Targetmolekül den Detektor passiert hat und in die zweite Säule eingetreten ist;
b)
i) Betreiben der Ventilanordnung (35), sodass der Auslass der zweiten Säule mit dem Einlass der dritten Säule, der Einlass der zweiten Säule und gegebenenfalls der Einlass der ersten Säule mit dem Vorrat des ersten Puffers und der Einlass der vierten Säule mit dem Vorrat an Waschflüssigkeit (45) verbunden ist,
ii) Anordnung des Detektors (D) zwischen dem Ausgang der zweiten Säule und dem Eingang der dritten Säule,
iii) anschließendes Pumpen von Waschflüssigkeit (45) in die vierte Säule, während der erste Puffer zumindest in den Einlass der zweiten Säule gepumpt wird, bis das Targetmolekül den Detektor passiert hat und in die dritte Säule eingetreten ist;
c)
i) Betreiben der Ventilanordnung (35), sodass der Auslass der dritten Säule mit dem Einlass der vierten Säule, der Einlass der dritten Säule und gegebenenfalls der Einlass der zweiten Säule mit dem Vorrat des ersten Puffers und der Einlass der ersten Säule mit dem Vorrat an Waschflüssigkeit verbunden ist,
ii) Anordnen des Detektors (D) zwischen dem Ausgang der dritten Säule und dem Eingang der vierten Säule,
iii) anschließendes Pumpen von Waschflüssigkeit (45) in die erste Säule, während der erste Puffer zumindest in den Einlass der dritten Säule gepumpt wird, bis das Targetmolekül den Detektor passiert hat und in die vierte Säule eingetreten ist,
d)
i) Betreiben der Ventilanordnung (35), sodass der Auslass der vierten Säule mit einer Ventileinrichtung zum Ableiten von Fluid zu einer Abfallanordnung (W) oder einer Targetaufnahmeanordnung (S) verbunden ist, der Einlass der dritten Säule mit dem Vorrat an Waschflüssigkeit verbunden ist, der Auslass der ersten Säule mit dem Einlass der zweiten Säule verbunden ist und die Auslässe der zweiten und dritten Säule mit der Abfallanordnung verbunden sind;
ii) Anordnen des ersten Detektors (D) zwischen dem Auslass der ersten Säule und dem Einlass der zweiten Säule, und Anordnen des zweiten Detektors zwischen dem Auslass der vierten Säule und dem Einlass der Aufnahmeanordnung,
iii) Pumpen von Waschflüssigkeit (45) in die dritte Säule und von erstem Puffer (43) in den Einlass von mindestens der vierten Säule, bis das Targetmolekül den Detektor (D) passiert hat und in die Aufnahmeanordnung (S) eingetreten ist.

5. Verfahren nach Anspruch 1 oder Anspruch 2 für ein Größenausschlusschromatographie-, d. h. SEC- oder Entsalzungssystem, umfassend vier Säulen zur Abtrennung eines Targets (41) von einer Probe, wobei das Target drei Säulen (A, B, C, D) durchläuft, bevor es aufgenommen wird, wobei jede Säule einen Einlass und einen Auslass aufweist und mit einer Ventilanordnung (35), beispielsweise einem Multipositionsventil, fluidisch verbindbar ist, die zum selektiven gleichzeitigen Verbinden von nur zwei der Chromatographiesäulen in Reihe und einer der anderen Chromatographiesäulen mit dem Fluss der Waschflüssigkeit (45) angeordnet ist, wobei das Ventil eine erste Einlassöffnung zur Eingabe einer Pufferlösung, eine zweite Einlassöffnung zur Eingabe einer Waschflüssigkeit, eine Einlassöffnung zum Aufnehmen von Flüssigkeit aus den Chromatographiesäulen und eine erste Auslassöffnung umfasst, die zu einer Ventileinrichtung zum Ableiten von Flüssigkeit zu einer Abfallanordnung oder einer Targetaufnahmeanordnung führt;
wobei das System weiter Folgendes umfasst:
einen ersten Detektor (D) zum Nachweis des Vorhandenseins der Targetsubstanz (41),
einen zweiten Detektor (D) zum Nachweis des Vorhandenseins der Targetsubstanz (41),
eine Vielzahl von Pumpen (49A, 49B) zum Pumpen von Puffer- und Waschflüssigkeit;
einen Vorrat an einer ersten Pufferlösung (43);
einen Vorrat der Waschflüssigkeit (45); und
eine Einrichtung (42) zur Injektion einer Probe in eine SEC-Säule,
wobei das Verfahren die folgenden Schritte umfasst:
a)
i) Positionieren der Ventilanordnung (35), sodass der Einlass einer dritten Säule mit einem Vorrat an Waschflüssigkeit (45) verbunden ist, der Auslass einer ersten Säule mit dem Einlass einer zweiten Säule verbunden ist, der Einlass der ersten Säule und gegebenenfalls der Einlass der vierten Säule mit dem Vorrat des ersten Puffers (43) verbunden ist und die Auslässe der zweiten, dritten und vierten Säule zu einer Abfallanordnung (W) geleitet werden,
ii) Anordnen des Detektors (D) zwischen dem Auslass der ersten Säule und dem Einlass der zweiten Säule,
iii) Injizieren einer Probe S, die die Targetsubstanz (41) enthält, in den Einlass der ersten Säule;
iv) anschließendes Pumpen von Waschflüssigkeit (45) in die dritte Säule und Pumpen von erstem Puffer in den Einlass von mindestens der ersten Säule und gegebenenfalls der vierten Säule, bis das Targetmolekül den Detektor passiert hat und in die zweite Säule eingetreten ist;
b)
i) Positionieren der Ventileinrichtung (35), sodass der Auslass der zweiten Säule mit dem Einlass der dritten Säule verbunden ist, der Einlass der zweiten Säule und gegebenenfalls der Einlass der ersten Säule mit dem Vorrat des ersten Puffers (43) verbunden ist, der Einlass der vierten Säule mit dem Vorrat an Waschflüssigkeit (45) verbunden ist,
ii) Anordnung des Detektors (D) zwischen dem Ausgang der zweiten Säule und dem Eingang der dritten Säule,
iii) anschließendes Pumpen von Waschflüssigkeit (45) in die vierte Säule, während der erste Puffer zumindest in den Einlass der zweiten Säule gepumpt wird, bis das Targetmolekül den Detektor passiert hat und in die dritte Säule eingetreten ist;
c)
i) Positionieren der Ventilanordnung (35), sodass der Auslass der dritten Säule mit einer Ventileinrichtung zum Ableiten von Flüssigkeit zu einer Abfallanordnung oder einer Targetaufnahmeanordnung verbunden ist, der Einlass der dritten Säule mit dem Puffervorrat verbunden ist, der Auslass der vierten Säule mit dem Einlass der ersten Säule verbunden ist und die Auslässe der ersten Säule und der zweiten Säule mit der Abfallanordnung verbunden sind;
ii) Anordnen des ersten Detektors (D) zwischen dem Auslass der vierten Säule und dem Einlass der ersten Säule, und Anordnen des zweiten Detektors zwischen dem Auslass der dritten Säule und dem Einlass der Aufnahmeanordnung;
iii) Pumpen von Waschflüssigkeit (45) in die zweite Säule und von erstem Puffer (43) in den Einlass von mindestens der dritten Säule, bis das Targetmolekül den Detektor passiert hat und in die Aufnahmeanordnung eingetreten ist.

6. Verfahren nach Anspruch 4 oder Anspruch 5, umfassend den Schritt:
Wiederholung der Schritte des Verfahrens, wobei bei jeder Wiederholung die Benennung jeder Spalte (A, B, C, D) um eins zur Basis vier verringert wird, sodass die zweite Spalte in die erste Spalte, die erste Spalte in die vierte Spalte, die dritte Spalte in die zweite Spalte und die vierte Spalte in die dritte Spalte umbenannt wird.

7. Verfahren nach einem der vorstehenden Ansprüche, wobei die Durchflußmenge in jeder Säule (A, B, C, D) so gesteuert wird, dass sie im wesentlichen identisch ist.

8. Chromatographiesystem (30), umfassend eine Vielzahl von Säulen (A, B, C, D), die miteinander verbunden werden können, um eine chromatographische Trennung durchzuführen, **dadurch gekennzeichnet, dass** das System Folgendes umfasst:
mindestens drei im wesentlichen identische SEC- oder Entsalzungssäulen (A, B, C...), wobei jede Säule einen Einlass (Ai, Bi, Ci...) und einen Auslass (Ao, Bo, Co,...) aufweist und in Fluidverbindung mit einer Ventilanordnung (35) steht, um zu jedem Zeitpunkt selektiv nur zwei der Chromatographiesäulen in Reihe zu schalten, wobei die Ventilanordnung (35) einen ersten Einlassanschluss zur Eingabe einer Pufferlösung (43), einen zweiten Einlassanschluss zur Eingabe einer Pufferlösung, einen dritten Einlassanschluss zur Eingabe einer Waschlösung (45), einen ersten Auslassanschluss, der zu einer Abfallanordnung (W) führt, einen zweiten Auslassanschluss, der zu einer Targetaufnahmeanordnung (S) führt, sowie einen dritten, vierten und fünften Ausgang umfasst, die gleichzeitig mit drei der mindestens drei Säulen verbunden werden können;
wobei das System weiter Folgendes umfasst:
eine erste Sensorleitung zum Nachweis des Vorhandenseins der Targetsubstanz, umfassend einen ersten Sensor (47A), der mit einem Einlassanschluss und einem Detektorauslassanschluss der Ventilanordnung (35) verbindbar ist,
eine zweite Sensorleitung zum Nachweis des Vorhandenseins der Targetsubstanz, die einen zweiten Sensor (47B) umfasst, der mit einem Einlassanschluss und einem Detektorauslassanschluss der Ventilanordnung (35) verbunden werden kann,
eine erste Pumpe (49A) zum Einspritzen von Flüssigkeit in die erste Einlassöffnung;
eine zweite Pumpe (49B) zum Einspritzen von Flüssigkeit in die zweite Einlassöffnung;
eine dritte Pumpe zum Einspritzen von Flüssigkeit in die dritte Einlassöffnung;
einen Vorrat an einer ersten Pufferlösung (43);
einen Vorrat der Waschlösung (45); und
eine Einrichtung (42) zum Laden einer Probe in eine Säule.

9. System (30) nach Anspruch 8, wobei das System N Säulen (A, B, C, D) umfasst und mit Steuereinrichtungen (51) bereitgestellt ist, die so angeordnet sind, dass sie die Sensoren (47A, 47B) überwachen und die Pumpen (49A, 49B) und Einrichtungen (42) zum Laden einer Probe (39) in eine Säule steuern.

10. System (30) nach Anspruch 9, wobei die Steuereinrichtung (51) zur Durchführung eines Trennungszyklus ausgelegt ist, wobei der Trennungszyklus so angeordnet ist, dass er über N-1 Säulen in Reihe durchgeführt wird und die verbleibende Säule während des Trennungszyklus einer Wäsche unterzogen wird.

11. System (30) nach Anspruch 9, wobei die Steuereinrichtung (51) zur Durchführung eines Trennungszyklus ausgelegt ist, wobei der Trennungszyklus so angeordnet ist, dass er über N Säulen in Reihe durchgeführt wird und mindestens eine Säule während des Trennungszyklus einer Wäsche unterzogen wird.

12. System (30) nach einem der Ansprüche 8 bis 11, wobei die Säulen (A, B, C, D) im wesentlichen die gleiche Leistung und bevorzugt das gleiche Trennmedium und Packungsprotokoll aufweisen.

## Revendications

1. Procédé pour effectuer une séparation par chromatographie d'exclusion de taille, c'est-à-dire SEC, ou un dessalage d'une cible (41) à partir d'un échantillon (39) dans un système (30), comprenant :
i) l'étape consistant à fournir un système (30) avec au moins trois colonnes (A, B, C, D), dont au moins deux peuvent être reliées en série en même temps ;
ii) l'étape consistant à relier en série une colonne (A, B, C, D) contenant la cible (41) avec une autre des colonnes,
iii) l'étape consistant à laver au moins une colonne supplémentaire avec un fluide de lavage (45) en même temps que la cible est transportée par un flux de tampon (43) de ladite colonne contenant la cible (41) vers ladite autre des colonnes,
dans lequel lesdites au moins trois colonnes comprennent quatre colonnes (A, B, C, D) pour séparer une cible (41) d'un échantillon,
dans lequel la cible passe à travers trois ou quatre colonnes avant d'être collectée, dans lequel chaque colonne présente une entrée (Ai, Bi, Ci, Di) et une sortie (Ao, Bo, Co, Do) reliées de manière fluidique à un agencement de vanne (35) pour relier simultanément et sélectivement lesdites au moins deux colonnes de chromatographie en série et une des autres colonnes de chromatographie à un flux de fluide de lavage (45),
dans lequel ledit agencement de vanne (35) comprend une première entrée (P1) pour introduire une solution tampon, une seconde entrée (P2) pour introduire un fluide de lavage (45), une entrée pour recevoir un fluide provenant desdites colonnes de chromatographie, et une première sortie menant à des moyens formant vanne pour dévier le fluide vers un agencement de mise au rebut (W) ou un agencement de collecte de cible (S) ;
le système (30) comprenant en outre :
un premier détecteur (D) pour détecter la présence de la substance cible (41) ;
un second détecteur (D) pour détecter la présence de la substance cible (41) ;
une ou plusieurs pompes (49A, 49B) pour pomper le tampon et le fluide de lavage (43, 45) ;
une alimentation en une première solution tampon ;
une alimentation en ledit fluide de lavage ; et
un moyen (42) pour injecter un échantillon (39) dans une colonne de SEC.

2. Procédé selon la revendication 1, comprenant en outre l'étape suivante consistant à relier la sortie (Ao, Bo, Co, Do) de ladite autre colonne à l'entrée (Ai, Bi, Ci, Di) de la colonne supplémentaire lavée et à collecter ensuite la cible (41) à partir de la sortie (Ao, Bo, Co, Do) de la colonne lavée.

3. Procédé selon la revendication 1, comprenant en outre les étapes consistant à transporter la cible (41) en série à partir de la sortie (Ao, Bo, Co, Do) de ladite autre colonne dans n'importe quel ordre à travers ladite colonne supplémentaire lavée et une ou plusieurs colonnes additionnelles, et enfin à collecter la cible (41) à partir de la dernière colonne additionnelle ou de la colonne supplémentaire lavée.

4. Procédé selon l'une quelconque des revendication 1-3, comprenant en outre les étapes consistant à :
a)
i) faire fonctionner l'agencement de vanne (35) de telle sorte que l'entrée d'une troisième colonne soit reliée à une alimentation en fluide de lavage, la sortie d'une première colonne soit reliée à l'entrée d'une deuxième colonne, l'entrée de la première colonne et facultativement l'entrée de la quatrième colonne soient reliées à l'alimentation en ledit premier tampon (43) et les sorties desdites deuxième, troisième et quatrième colonnes soient dirigées vers un agencement de mise au rebut (W),
ii) agencer ledit détecteur (D) entre la sortie de la première colonne et l'entrée de la deuxième colonne,
iii) injecter un échantillon S contenant ladite substance cible (41) dans l'entrée de ladite première colonne ;
iv) pomper ensuite le fluide de lavage (45) dans ladite troisième colonne et pomper le premier tampon dans l'entrée d'au moins ladite première colonne et facultativement de ladite quatrième colonne, jusqu'à ce que la molécule cible ait passé ledit détecteur et soit entrée dans la deuxième colonne ;
b)
i) faire fonctionner l'agencement de vanne (35) de telle sorte que la sortie de ladite deuxième colonne soit reliée à l'entrée de ladite troisième colonne, l'entrée de la deuxième colonne, et facultativement l'entrée de ladite première colonne soient reliées à l'alimentation dudit premier tampon, l'entrée de la quatrième colonne soit reliée à l'alimentation en fluide de lavage (45),
ii) agencer ledit détecteur (D) entre la sortie de la deuxième colonne et l'entrée de la troisième colonne,
iii) pomper ensuite le fluide de lavage (45) dans ladite quatrième colonne tout en pompant le premier tampon dans au moins l'entrée de ladite deuxième colonne jusqu'à ce que la molécule cible ait passé ledit détecteur et soit entrée dans la troisième colonne ;
c)
i) faire fonctionner l'agencement de vanne (35) de telle sorte que la sortie de ladite troisième colonne soit reliée à l'entrée de ladite quatrième colonne, l'entrée de la troisième colonne et facultativement l'entrée de ladite deuxième colonne soient reliées à l'alimentation dudit premier tampon, l'entrée de la première colonne soit reliée à l'alimentation en fluide de lavage,
ii) agencer ledit détecteur (D) entre la sortie de la troisième colonne et l'entrée de la quatrième colonne,
iii) pomper ensuite le fluide de lavage (45) dans ladite première colonne tout en pompant le premier tampon dans au moins l'entrée de ladite troisième colonne jusqu'à ce que la molécule cible ait passé ledit détecteur et soit entrée dans la quatrième colonne,
d)
i) faire fonctionner l'agencement de vanne (35) de telle sorte que la sortie de ladite quatrième colonne soit reliée à des moyens de vanne pour dévier le fluide vers un agencement de mise au rebut (W) ou un agencement de collecte de cible (S), l'entrée de ladite troisième colonne soit reliée à l'alimentation en fluide de lavage, la sortie de ladite première colonne soit reliée à l'entrée de ladite deuxième colonne, et les sorties de la deuxième colonne et de la troisième colonne soient reliées à l'agencement de mise au rebut ;
ii) agencer ledit premier détecteur (D) entre la sortie de ladite première colonne et l'entrée de ladite deuxième colonne, et agencer ledit deuxième détecteur entre la sortie de la quatrième colonne et l'entrée de l'agencement de collecte,
iii) pomper le fluide de lavage (45) dans ladite troisième colonne et le premier tampon (43) dans l'entrée d'au moins les quatrièmes colonnes jusqu'à ce que la molécule cible ait passé ledit détecteur (D) et soit entrée dans l'agencement de collecte (S).

5. Procédé selon la revendication 1 ou la revendication 2 pour une chromatographie d'exclusion de taille, c'est-à-dire SEC, ou un système de dessalage comprenant quatre colonnes pour séparer une cible (41) d'un échantillon, dans lequel la cible passe à travers trois colonnes (A, B, C, D) avant d'être collectée, dans lequel chaque colonne présente une entrée et une sortie, et peut être reliée de manière fluidique à un agencement de vanne (35), par exemple une vanne à plusieurs positions, conçue pour relier simultanément et sélectivement seulement deux desdites colonnes de chromatographie en série et une des autres colonnes de chromatographie au flux de fluide de lavage (45), dans lequel ladite vanne comprend un premier orifice d'entrée pour introduire une solution tampon, un deuxième orifice d'entrée pour introduire un fluide de lavage, un orifice d'entrée pour recevoir le fluide provenant desdites colonnes de chromatographie, un premier orifice de sortie menant à des moyens formant vanne pour dévier le fluide vers un agencement de mise au rebut ou un agencement de collecte de cible ;
le système comprenant en outre
un premier détecteur (D) pour détecter la présence de la substance cible (41),
un second détecteur (D) pour détecter la présence de la substance cible (41),
une pluralité de pompes (49A, 49B) pour pomper le tampon et le fluide de lavage ;
une alimentation en une première solution tampon ; et
une alimentation en ledit fluide de lavage (45) ; et
un moyen (42) pour injecter un échantillon dans une colonne de SEC,
dans lequel le procédé comprend les étapes consistant à :
a)
i) positionner l'agencement de vanne (35) de telle sorte que l'entrée d'une troisième colonne soit reliée à une alimentation en fluide de lavage (45), la sortie d'une première colonne soit reliée à l'entrée d'une deuxième colonne, l'entrée de la la première colonne et facultativement l'entrée de la quatrième colonne soient reliées à l'alimentation en ledit premier tampon (43) et les sorties desdites deuxième, troisième et quatrième colonnes soient dirigées vers un agencement de mise au rebut (W),
ii) agencer ledit détecteur (D) entre la sortie de la première colonne et l'entrée de la deuxième colonne,
iii) injecter un échantillon S contenant ladite substance cible (41) dans l'entrée de ladite première colonne ;
iv) pomper ensuite le fluide de lavage (45) dans ladite troisième colonne et pomper le premier tampon dans l'entrée d'au moins ladite première colonne et facultativement de ladite quatrième colonne, jusqu'à ce que la molécule cible ait passé ledit détecteur et soit entrée dans la deuxième colonne ;
b)
i) positionner l'agencement de vanne (35) de telle sorte que la sortie de ladite deuxième colonne soit reliée à l'entrée de ladite troisième colonne, l'entrée de la deuxième colonne, et facultativement l'entrée de ladite première colonne soient reliées à l'alimentation en ledit premier tampon (43), l'entrée de la quatrième colonne soit reliée à l'alimentation en fluide de lavage (45),
ii) agencer ledit détecteur (D) entre la sortie de la deuxième colonne et l'entrée de la troisième colonne,
iii) pomper ensuite le fluide de lavage (45) dans ladite quatrième colonne tout en pompant le premier tampon dans au moins l'entrée de ladite deuxième colonne jusqu'à ce que la molécule cible ait passé ledit détecteur et soit entrée dans la troisième colonne ;
c)
i) positionner l'agencement de vanne (35) de telle sorte que la sortie de ladite troisième colonne soit reliée à des moyens formant vanne pour dévier le fluide vers un agencement de mise au rebut ou un agencement de collecte de cible, l'entrée de ladite troisième colonne soit reliée à l'alimentation de tampon, la sortie de ladite quatrième colonne soit reliée à l'entrée de ladite première colonne, et les sorties de la première colonne et de la deuxième colonne soient reliées au système de mise au rebut ;
ii) agencer ledit premier détecteur (D) entre la sortie de ladite quatrième colonne et l'entrée de ladite première colonne, et agencer ledit deuxième détecteur entre la sortie de la troisième colonne et l'entrée de l'agencement de collecte ;
iii) pomper le fluide de lavage (45) dans ladite deuxième colonne et le premier tampon (43) dans l'entrée d'au moins la troisième colonne jusqu'à ce que la molécule cible ait passé ledit détecteur et soit entrée dans l'agencement de collecte.

6. Procédé selon la revendication 4 ou la revendication 5, incluant l'étape consistant à :
répéter les étapes du procédé, dans lequel à chaque répétition, la désignation de chaque colonne (A, B, C, D) est diminuée de un en base quatre, de telle sorte que la deuxième colonne est redésignée première colonne, la première colonne est redésignée quatrième colonne, la troisième colonne est redésignée deuxième colonne et la quatrième colonne est redésignée troisième colonne.

7. Procédé selon l'une quelconque des revendications précédentes, dans lequel le débit dans chaque colonne (A, B, C, D) est contrôlé de sorte à être sensiblement identique.

8. Système de chromatographie (30) comprenant une pluralité de colonnes (A, B, C, D) qui sont interconnectables pour effectuer une séparation chromatographique, **caractérisé en ce que** le système comprend :
au moins trois colonnes de SEC ou de dessalage (A, B, C...) sensiblement identiques, chaque colonne présentant une entrée (Ai, Bi, Ci...) et une sortie (Ao, Bo, Co,...), et étant reliée de manière fluidique à un agencement de vanne (35) pour relier sélectivement seulement deux desdites colonnes de chromatographie en série à n'importe quel moment, dans lequel ledit agencement de vanne (35) comprend un premier orifice d'entrée pour introduire une solution tampon (43), un deuxième orifice d'entrée pour introduire une solution tampon, un troisième orifice d'entrée pour introduire une solution de lavage (45), un premier orifice de sortie menant à un agencement de mise au rebut (W), un deuxième orifice de sortie menant à un agencement de collecte de cible (S), des troisième, quatrième et cinquième sorties pouvant être reliées simultanément à trois desdites au moins trois colonnes ;
le système comprenant en outre
une première ligne de capteur pour détecter la présence de la substance cible comprenant un premier capteur (47A) pouvant être connecté à un orifice d'entrée et à un orifice de sortie de détecteur de l'agencement de vanne (35),
une seconde ligne de capteur pour détecter la présence de la substance cible comprenant un second capteur (47B) pouvant être connecté à un orifice d'entrée et à un orifice de sortie de détecteur de l'agencement de vanne (35),
une première pompe (49A) pour injecter du fluide dans ledit premier orifice d'entrée ;
une deuxième pompe (49B) pour injecter du fluide dans ledit deuxième orifice d'entrée ;
une troisième pompe pour injecter du fluide dans ledit troisième orifice d'entrée ;
une alimentation en une première solution tampon ; et
une alimentation en ladite solution de lavage (45) ; et
un moyen (42) pour charger un échantillon dans une colonne.

9. Système (30) selon la revendication 8, dans lequel le système comprend N colonnes (A, B, C, D) et est pourvu d'un moyen de commande (51) conçu pour surveiller les capteurs (47A, 47B) et pour commander les pompes (49A , 49B) et d'un moyen (42) pour charger un échantillon (39) dans une colonne.

10. Système (30) selon la revendication 9, dans lequel le moyen de commande (51) est adapté pour effectuer un cycle de séparation, dans lequel le cycle de séparation est conçu pour être effectué sur N-1 colonnes en série et la colonne restante est soumise à un lavage pendant le cycle de séparation.

11. Système (30) selon la revendication 9, dans lequel le moyen de commande (51) est adapté pour effectuer un cycle de séparation dans lequel le cycle de séparation est conçu pour être effectué sur N colonnes en série et au moins une colonne est soumise à un lavage pendant le cycle de séparation.

12. Système (30) selon l'une quelconque des revendications 8 à 11, dans lequel les colonnes (A, B, C, D) présentent des performances sensiblement identiques et de préférence le même milieu de séparation et le même protocole de garnissage.
